# EUROPEAN PATENT SPECIFICATION

(11) **EP 4 084 732 B1**
(45) Date of publication and mention of the grant of the patent: **30.07.2025**
(21) Application number: 20909203.0
(22) Date of filing: 23.12.2020
(51) Int. Cl.: A61C 7/08, A61C 5/77, B32B 17/06, B32B 17/10, B29C 39/12, B29C 64/10, C03C 25/285, A61C 19/06

(54) **DENTAL APPLIANCE WITH A SURFACE HAVING PATTERNED GLASS IONOMER COATING, AND METHODS OF MAKING IT**
DENTALGERÄT MIT EINER OBERFLÄCHE MIT GEMUSTERTER GLASIONOMERBESCHICHTUNG, UND VERFAHREN ZU SEINER HERSTELLUNG.
APPAREIL DENTAIRE PRÉSENTANT UNE SURFACE AYANT UN REVÊTEMENT IONOMÈRE DE VERRE À MOTIFS, ET SES PROCÉDÉS DE FABRICATION

(30) Priority: 31.12.2019 US 201962956050 P
(43) Date of publication of application: 09.11.2022
(73) Proprietor: Solventum Intellectual Properties Company, Maplewood, MN 55144 (US)
(72) Inventor: VELAMAKANNI, Bhaskar V., Saint Paul, Minnesota 55133-3427 (US); KLAIBER, Paul R., Saint Paul, Minnesota 55133-3427 (US); RUSIN, Richard P., Saint Paul, Minnesota 55133-3427 (US); WANG, Yizhong, Saint Paul, Minnesota 55133-3427 (US); REDDY, Kevin T., Saint Paul, Minnesota 55133-3427 (US); STAY, Matthew S., Saint Paul, Minnesota 55133-3427 (US); SMITH, Matthew R. D., Saint Paul, Minnesota 55133-3427 (US); POST, Jennifer J., Saint Paul, Minnesota 55133-3427 (US)
(74) Representative: Vossius & Partner Patentanwälte Rechtsanwälte mbB
(86) International application number: PCT/IB2020/062420
(87) International publication number: WO 2021/137119

(56) References cited:
- WO-A1-2017/006178
- WO-A1-2017/062209
- WO-A1-2020/079555
- CN-A- 110 074 984
- US-A1- 2005 082 710
- US-A1- 2008 233 531
- US-A1- 2017 008 333
- US-A1- 2017 100 210

## Description

### BACKGROUND

Orthodontic treatments reposition misaligned teeth and improve bite configurations for improved cosmetic appearance and dental function. Teeth are repositioned by applying controlled forces to the teeth over an extended time period. In one example, teeth may be repositioned by placing a dental appliance, generally referred to as an orthodontic aligner or an orthodontic aligner tray, over the teeth of the patient for each treatment stage of an orthodontic treatment. The orthodontic alignment tray includes a polymeric shell defining a plurality of cavities for receiving one or more teeth. The individual cavities in the polymeric shell are shaped to exert force on one or more teeth to resiliently and incrementally reposition selected teeth or groups of teeth in the upper or lower jaw.

A series of orthodontic aligner trays are provided to a patient to be worn sequentially and alternatingly during each stage of the orthodontic treatment to gradually reposition teeth from one tooth arrangement to a successive tooth arrangement to achieve a desired tooth alignment condition. Once the desired alignment condition is achieved, an aligner tray, or a series of aligner trays, may be used periodically or continuously in the mouth of the patient to maintain tooth alignment. In addition, orthodontic retainer trays may be used for an extended time period to maintain tooth alignment following the initial orthodontic treatment.

Incidence and prevalence of white spot lesions (WSL) during fixed orthodontic treatment is a well-documented challenge to both patients and providers. Certain factors such as poor oral hygiene, particularly in younger male patients, and length of treatment, can increase the incidence of WSL, whereas, factors such as salivary flow and preventive fluoride therapy throughout the treatment can reduce the incidence of WSLs.

Although patients undergoing either fixed or aligner orthodontic treatment are encouraged to pursue enhanced oral hygiene, in many cases patients fail to follow the necessary daily hygienic procedures. For this reason, WSL formation during orthodontic treatments remains a widespread problem.

WO2017062209A1 discloses systems and methods for fabricating a dental or oral appliance utilizing support structures wherein a three dimensional representation of the dentition of a patient is captured and reconfigured for correcting one or more malocclusions.

### SUMMARY

The invention is as defined in the appended claims.

In general, the present disclosure is directed to a dental appliance having a continuous layer of a therapeutic material, or a pattern of discrete structures of a therapeutic material, on at least a portion of at least one major surface thereof, and to various example methods for making the dental appliance. For example, the layer or structures can release ions or compounds to protect the teeth against decalcification, reduce cavities, prevent biofilm formation on the exposed surfaces of the dental appliance, reduce, eliminate, and repair WSL, and the like. In some embodiments, the layer or structures can even be recharged with therapeutic agents, ions or compounds by exposing the dental appliance to an oral solution containing such therapeutic agents or compounds, and the structures then re-release the therapeutic compounds to a surface of the tooth when in use. The layer or structures can provide a wholistic solution to protect against WSL formation and repair damage to enamel caused by WSL during a treatment with a dental appliance such as an orthodontic aligner tray. The layer or structures includes a glass ionomer (GI), a resin-modified glass ionomer (RMGI), or a combination thereof that can control the dosage and duration of beneficial ion or compound release at a surface of the teeth throughout the treatment time in which the dental appliance is used in the mouth of a patient.

In one aspect, the present disclosure is directed to a method for making a dental appliance configured to position at least one tooth of a patient. The method includes printing a hardenable liquid resin composition on a major surface of a polymeric material to form a pattern thereon, wherein the hardenable liquid resin composition comprises a glass ionomer, a resin modified glass ionomer, and mixtures and combinations thereof; and forming a dental appliance from the polymeric material, wherein the dental appliance comprises an arrangement of cavities configured to receive one or more teeth.

In another aspect, the present disclosure is directed to a method for making a dental appliance configured to position at least one tooth of a patient. The method includes printing a hardenable liquid composition on a major surface of a release substrate to form a pattern of unhardened liquid regions thereon, wherein the hardenable liquid resin composition includes a glass ionomer, a resin modified glass ionomer, and mixtures and combinations thereof; at least partially hardening the unhardened liquid regions to form a corresponding array of structures, wherein the structures have a characteristic cross-sectional dimension of about 25 microns to about 1 mm, and a feature spacing of about 100 microns to about 2000 microns; contacting the release substrate with a major surface of the polymeric material such that the structures contact the major surface of the polymeric material; separating the release substrate and the polymeric material such that the structures transfer from the release substrate to the major surface of the polymeric material; and forming a dental appliance with the polymeric material, wherein the dental appliance includes a polymeric shell with cavities are configured to receive one or more teeth.

In another aspect, the present disclosure is directed to a method for making a dental appliance configured to position at least one tooth of a patient. The method includes printing a hardenable liquid resin composition on a major surface of a first polymeric film to form a pattern of discrete unhardened liquid regions thereon, wherein the hardenable liquid resin composition includes a glass ionomer, a resin modified glass ionomer, and mixtures and combinations thereof; forming a corresponding array of structures on the major surface of the first polymeric film, wherein the structures have a characteristic cross-sectional dimension of about 25 microns to about 1 mm, and a feature spacing of about 100 microns to about 2000 microns; contacting the major surface of the first polymeric film with a major surface of a second polymeric film, wherein the major surface of the second polymeric film includes a pattern of microstructures, and wherein the microstructures contact an exposed surface of at least a portion of the structures on the major surface of the first polymeric film; hardening the structures to form an inverse pattern of microstructures in the exposed surfaces of the structures; and forming a dental appliance with the polymeric material, wherein the dental appliance includes an arrangement of cavities configured to receive one or more teeth.

In another aspect, the present disclosure is directed to a method for making a dental appliance configured to position at least one tooth of a patient. The method includes applying a transfer layer on a major surface of a first polymeric film substrate, wherein the transfer layer includes a glass ionomer, a resin modified glass ionomer, and mixtures and combinations thereof; printing a release composition on the transfer layer to form a pattern of discrete release structures thereon; at least partially hardening the release structures; contacting the first polymeric film substrate with a major surface of a second polymeric film substrate such that the release structures contact the major surface of the second polymeric film substrate; removing the first polymeric film substrate from the second polymeric film substrate such that portions of the transfer layer uncovered by the release structures transfer from the major surface of the first polymeric film substrate to the major surface of the second polymeric film substrate; and forming a plurality of cavities in the second polymeric film substrate to form the dental appliance, wherein the dental appliance includes an arrangement of cavities configured to receive one or more teeth.

In another aspect, the present disclosure is directed to a dental appliance including a polymeric substrate comprising a plurality of cavities for receiving one or more teeth; and an array of printed structures on the substrate, wherein the printed structures include a glass ionomer, a resin modified glass ionomer, and mixtures and combinations thereof, and wherein the structures have an average feature size of about 25 µm to about 1000 µm and an average feature spacing of about 100 µm to about 2000 µm, and wherein the dental appliance has a visible light transmission of about 75% to about 99%.

In another aspect, the present disclosure is directed to a method of dental treatment, including: printing with flexographic or screen printing an array of discrete liquid regions of a hardenable resin composition on a major surface of a polymeric film substrate, wherein the hardenable resin composition includes a therapeutic agent and a glass ionomer, a resin modified glass ionomer, and mixtures and combinations thereof; at least partially hardening the discrete liquid regions to form a pixelated array of structures on the major surface of the substrate, wherein the structures have an average feature size of about 25 µm to about 1000 µm and an average feature spacing of about 100 µm to about 2000 µm; forming the substrate to form a dental appliance including a plurality of cavities for receiving one or more teeth, wherein the dental appliance is transparent to visible light; and releasing the therapeutic agents into the mouth of a patient.

In another aspect, the present disclosure is directed to a method for making a dental appliance configured to position at least one tooth of a patient, the method including: printing a hardenable liquid resin composition on a major surface of a polymeric material to form a pattern of discrete unhardened liquid regions thereon, wherein the hardenable liquid resin composition includes at least one of a glass ionomer and a resin modified glass ionomer; at least partially hardening the unhardened liquid regions to form a corresponding first pattern of structures on the major surface of the polymeric material, wherein the structures have a characteristic cross-sectional dimension of about 25 microns to about 1 mm, and a feature spacing of about 100 microns to about 2000 microns; and forming a plurality of cavities in the polymeric material to form the dental appliance, wherein the dental appliance includes an arrangement of cavities are configured to receive one or more teeth, and wherein the dental appliance includes a second pattern of structures different from the first pattern.

In another aspect, the present disclosure is directed to a method for making a dental appliance configured to position at least one tooth of a patient, the method including: forming dental appliance having an arrangement of cavities configured to receive one or more teeth; applying a hardenable liquid resin composition on at least one surface of the dental appliance, wherein the hardenable liquid resin composition includes at least one of a glass ionomer and a resin modified glass ionomer; and hardening the unhardened liquid composition to form at least one pattern on the surface of the dental appliance.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1 is a schematic cross-sectional view of a direct printing process for making structures on a dental appliance.
FIG. 2 is a schematic cross-sectional view of an indirect printing process for making structures on a dental appliance.
FIG. 3 is a schematic cross-sectional view of an indirect printing process for making structures on a dental appliance.
FIG. 4 is a schematic cross-sectional view of a direct printing process for making structures on a dental appliance, wherein the structures have a microstructured surface.
FIG. 5 is a schematic perspective view of a dental appliance as applied to teeth of a patient.
FIG. 6A is a photograph of a PETG disc coated with a pixelated pattern of structures including a RMGI as described in Example 2. FIG. 6B is a photograph of a clear tray aligner (CTA) made from the PETG disc of FIG. 6A, and FIG. 6C is a photograph of the CTA of FIG. 6B on a typodont.
FIG. 7A is a photograph of a PETG disc having a portion of the disc surface coated with a pixelated pattern of structures including a RMGI as described in Example 3. FIG. 7B is a photograph of a clear tray aligner (CTA) made from the PETG disc of FIG. 7A, and FIG. 7C is a photograph of the CTA of FIG. 7B on a typodont.

Like symbols in the drawings indicate like elements.

### DETAILED DESCRIPTION

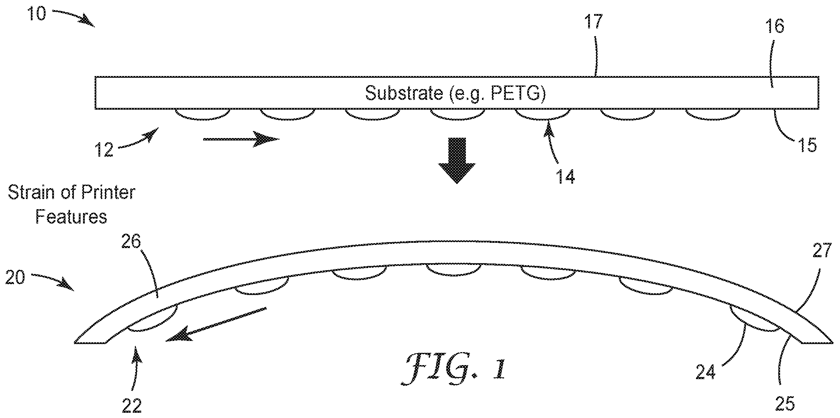

FIG. 1 is a schematic depiction of a direct patterning process 10 that may be used to form a dental appliance, which is also referred to herein as an orthodontic aligner tray or retainer tray. In a first step a continuous coating layer (not shown in FIG. 1) or a pattern 12 of discrete unhardened liquid regions 14 of a hardenable liquid composition are applied on at least one major surface 15, 17 of a polymeric film substrate 16. The hardenable liquid composition may be applied to the surface 15, 17 by any suitable coating or printing technique, and examples include, but are not limited to, screen printing, flexographic printing, ink jet printing, gravure printing, pad printing, and combinations thereof.

As will be described in more detail below, the liquid regions 14 are subsequently hardened to form a pattern 22 of discrete structures 24 on either or both major surfaces 25, 27 of the substrate 26, which substantially corresponds to the pattern 12 of discrete liquid regions 14. The substrate 16 is formed into a dental appliance 20 that includes a plurality of cavities (not shown in FIG. 1) configured to retain one or more teeth of a patient.

In the present application the term discrete refers to individual liquid regions that are free-standing, separate and distinct from one another, and do not share an edge-to-edge border. In some embodiments the pattern 12 is "pixilated" (decomposed into small, finely spaced discrete structures), which in some cases can prevent substantial distortion of the pattern 12 during subsequent processing steps. In addition to providing a desired aesthetic effect, the configuration of the pattern can also be used to provide a controlled release of beneficial therapeutic compounds when the polymeric film substrate is utilized as a dental appliance.

The substrate 16 may be selected from any suitable elastic polymeric material that is moldable to form a dental appliance, and once molded is generally conformable to a patient's teeth. The substrate 16 may be transparent, translucent, or opaque. In some embodiments, the substrate 16 is a clear or substantially transparent polymeric material that may include, for example, one or more of amorphous thermoplastic polymers, semi-crystalline thermoplastic polymers and transparent thermoplastic polymers chosen from polycarbonate, thermoplastic polyurethane, acrylic, polysulfone, polyprolylene, polypropylene/ethylene copolymer, cyclic olefin polymer/copolymer, poly-4-methyl-1-pentene or polyester/polycarbonate copolymer, styrenic polymeric materials, polyamide, polymethylpentene, polyetheretherketone and combinations thereof. In another embodiment, the substrate 16 may be chosen from clear or substantially transparent semi-crystalline thermoplastic, crystalline thermoplastics and composites, such as polyamide, polyethylene terephthalate. polybutylene terephthalate, polyester/polycarbonate copolymer, polyolefin, cyclic olefin polymer, styrenic copolymer, polyetherimide, polyetheretherketone, polyethersulfone, polytrimethylene terephthalate, and mixtures and combinations thereof. In some embodiments, the substrate 16 is a polymeric material chosen from polyethylene terephthalate, polyethylene terephthalate glycol, polycyclohexylenedimethylene terephthalate glycol, and mixtures and combinations thereof. One example of a commercially available material suitable as the elastic polymeric material for the substrate 16, which is not intended to be limiting, is polyethylene terephthalate (polyester with glycol additive (PETg)). Suitable PETg resins can be obtained from various commercial suppliers such as, for example, Eastman Chemical, Kingsport, TN; SK Chemicals, Irvine, CA; DowDuPont, Midland, MI; Pacur, Oshkosh, WI; and Scheu Dental Tech, Iserlohn, Germany.

The substrate 16 may be made of a single polymeric material or may include multiple layers of the same or different polymeric materials.

In various embodiments, the substrate 16 has a thickness of less than 1 mm, but varying thicknesses may be used depending on the application of the orthodontic appliance 100. In various embodiments, the substrate 16 has a thickness of about 50 µm to about 3,000 µm, or about 300 µm to about 2,000 µm, or about 500 µm to about 1,000 µm, or about 600 µm to about 700 µm.

In one embodiment, the substrate 16 is a substantially transparent polymeric material, which in this application refers to materials that pass light in the wavelength region sensitive to the human eye (about 0.4 micrometers (µm) to about 0.75 µm), while in some cases also rejecting light in other regions of the electromagnetic spectrum. In some embodiments, the substrate 16 is substantially transparent to visible light of about 400 nm to about 750 nm at a thickness of about 50 µm to about 1000 µm. In various embodiments, the visible light transmission through the combined thickness of the substrate is at least about 75%, or about 85%, or about 90%, or about 95%, or about 99%. In various embodiments, the substrate 16 has a haze of about 0% to about 20%, or about 1% to about 10%, or about 3% to about 8%. In various embodiments, the substrate 16 has a clarity of about 75% to about 100%, or about 85% to about 99%, or about 90% to about 95%. The optical properties of the substrate can be measured using standards such as ASTM D1003-13 by a wide variety of optical instruments such as, for example, those available under the trade designation Haze Guard from BYK Gardner, Columbia, MD.

In some embodiments, the major surface of the polymeric sheet to which the liquid regions 14 are applied may optionally be chemically or mechanically treated prior to applying the hardenable liquid composition to, for example, enhance adhesion between the surface 15, 17 and the liquid regions 14. Examples of suitable treatments include, but are not limited to, corona treatments, ozonation, application of silane coupling agents, application of primers, application of adhesives, and combinations thereof. Suitable adhesives include, but are not limited to, those available from 3M, St. Paul, MN under the trade designation SCOTCHBOND UNIVERSAL ADHESIVE.

In various embodiments, the discrete liquid regions 14 may form a continuous or a discontinuous array over the surfaces 15 or 17, or both. For example, some areas of the surfaces 15, 17 may be free of the liquid regions 14, while other areas have a dense arrangement of liquid regions 14. In another example embodiment, various areas of the surfaces 15, 17 may have liquid regions 14 with varying shapes and feature spacings. The sizes and shapes of the liquid regions 14 can vary widely, and the liquid regions 14 need not be the same size or shape in a particular area of the surfaces 15, 17, or over the entire surfaces 15, 17. For example, in some embodiments, the liquid regions 14 can form an aesthetic pattern, an image, a logo, a bar code, a QR code, and the like. In other embodiments, the liquid regions 14 simply form an array of dots over all or a portion of either or both of the surfaces 15, 17. In some embodiments, the liquid regions 14 may be applied on the substrate 16 in an array with sizes and feature spacings such that the visible light transmission through the thickness of the substrate and the liquid regions is at least about 75%, or about 85%, or about 90%, or about 95%. In various embodiments, which are provided as non-limiting examples, the liquid regions are applied to maintain sufficient substrate transparency, and at least about 20% of the surface 15 is free of liquid regions, or about 50%, about 75%, about 90%, or about 98%.

In various embodiments, areas of the surfaces 15, 17 may include liquid regions 14 of differing sizes, shapes or compositions, and in some embodiments, two or more different configurations of the liquid regions 14 can be deposited on at least a portion of the surfaces 15, 17. For example, liquid regions 14 with a first shape or size can be disposed on a first area of the surface 15, and liquid regions 14 with a second shape or size, different from the first shape or size, can be disposed in a second area of the surface 15.

In various embodiments, the liquid regions 14 can have varying cross-sectional shapes, which can be the same or different from the cross-sectional shapes of liquid regions in other areas on the surfaces 15, 17. In some embodiments, the liquid regions 14 are have a substantially hemispherical cross-sectional shape, and appear as arrays of dots on the surfaces 15, 17, and in other embodiments may have any cross-sectional shape such as squares, triangles, rectangles, and the like. In other embodiments, the liquid regions 14 can have an appearance in a plan view that is different from the cross-sectional shape. For example, in some embodiments as discussed in more detail below, the liquid regions can be further structured after the liquid regions are formed so that the plan view shape is different from the cross-sectional shape. In one example that is not intended to be limiting, the liquid regions 14 can appear circular in the plan view, but could have a cross-sectional shape of a triangle

The liquid regions 14 can be uniformly arranged or randomly distributed in some areas on the surfaces 15, 17, and randomly distributed on other areas if the surfaces 15, 17. For example, the liquid regions 14 can be arranged uniformly on the first surface 15 and distributed randomly on the second major surface 17. In various embodiments, the height of the liquid regions 14 above the surfaces 15, 17, the width and length on the surface 15, 17, or both, can vary between areas of the surfaces 15, 17, and even can vary within a selected area.

In some embodiments, which are not intended to be limiting, the liquid regions 14 include a base having at least one microscale cross-sectional dimension. In various example embodiments, the liquid regions 14 can include a base on the surfaces 15, 17 having cross-sectional dimensions of about 25 µm to about 1000 µm, or about 100 µm to about 300 µm, or about 150 µm to about 250 µm.

In some embodiments, which are provided as an example, the liquid regions 14 have a feature spacing (i.e., the center to center distance between adjacent liquid regions) of about 100 µm to about 2000 µm or about 750 µm to about 1500 µm, or about 800 µm to about 1300 µm. In some embodiments, which are not intended to be limiting, the liquid regions 14 are present on the surfaces 15, 17 at about 10 to about 5000 dots per inch (dpi), or about 25 dpi to about 1000 dpi, or about 100 dpi to about 300 dpi, where the conversion factor is 100 dpi = 39,4 dots per cm.

In some example embodiments, the liquid regions 14 have a characteristic length of about 250 µm to about 2500 µm, or about 500 µm to about 1500 µm, or about 750 µm to about 1400 µm. In some example embodiments, the liquid regions 14 have an aspect ratio of about 0.0005 to about 0.01, or about 0.005 to about 0.05, or about 0.10 to about 0.20. In the present application, the term aspect ratio means a ratio of the height to the width of the discrete features.

The hardenable liquid resin composition that forms the liquid regions 14 includes a glass ionomer (GI) or resin-modified glass ionomer (RMGI), or a combination thereof. Generally, GI and RMGI materials are either self-cured and/or light cured bioactive dental restorative materials that form a polymerized resin matrix that bonds to a tooth. In the present application the term GI refers to compositions that include a homopolymer of an α,β unsaturated carboxylic acid, a glass filler such as fluoroaluminosilicate glass (FAS), and water. The term RMGI as used herein refers to compositions that include an α,β unsaturated carboxylic acid, a glass filler such as fluoroaluminosilicate glass (FAS), and water. The term "ethylenically unsaturated compounds with acid functionality" is meant to include monomers, oligomers, and polymers having ethylenic unsaturation and acid and/or acid-precursor functionality. Acid-precursor functionalities include, for example, anhydrides, acid halides, and pyrophosphates. In the RMGI the polyacid is modified to replace or end-cap some of the acidic repeating units with pendant curable groups and an optional photoinitiator can be added to provide a second curing mechanism. Acrylate or methacrylate (also referred to herein as (meth)acrylates) groups can be used as the pendant curable groups. In some embodiments, the polyacid may optionally be modified to replace or end-cap some of the acidic repeating units with pendant curable groups, and a redox or other chemical cure system can be used instead of or in addition to the photoinitiator system.

GI and RMGI compositions are usually formulated as powder/liquid or paste/paste systems, and contain water as mixed and applied. They may partially or fully harden in the dark due to the ionic reaction between the acidic repeating units of the polycarboxylic acid and cations leached from the glass, and some commercially available RMGI products can also cure on exposure of the compositions to light from a dental curing lamp.

In various embodiments, GI/RMGI materials have calcium and phosphate ion release and recharge capabilities, re-mineralize enamel and/or dentine surfaces, and increase resistance of contacted tooth structures to acid attack. The release of ions (for example, at least one of calcium, fluoride and phosphorus) into the oral environment is known to enhance the natural re-mineralizing capability of dental structures, and the sustained release of calcium and phosphorous provided by GI/RMGI materials can be used to enhance mineralization a the surfaces of the teeth and reduce, prevent or repair WSL during a desired treatment time with a dental appliance, as well as improve the general oral health of the patient.

The hardenable liquid GI/RMGI composition forming the liquid regions 14 includes a resin matrix formed by a polyacid and an optional polymerizable component, as well as at least one of a nanofiller and a dental filler. By "hardenable" is meant that the composition can be cured or solidified, e.g., by heating, chemical cross-linking, radiation-induced polymerization or crosslinking, or the like.

In some embodiments, the dental filler can have a treated surface configured to release beneficial ions such as, for example, at least one of calcium, fluoride and phosphorus, into an oral environment at a predetermined rate. For example, the surface treated fillers may include a phosphate salt as disclosed in U.S. Patent No. 10,137,061.

In some embodiments, the hardenable liquid GI/RMGI composition forming the liquid regions 14 includes a therapeutic agent in addition to or separate from those provided by the surface treated dental filler. In this application the term therapeutic agent refers to compounds that can have a beneficial effect in the mouth of the patient. Examples of suitable therapeutic agents for the hardenable resin composition include, but are not limited to, fluoride sources, whitening agents, anti-cavity agents (e.g., xylitol), re-mineralizing agents (e.g., calcium phosphate compounds), enzymes, breath fresheners, anesthetics, clotting agents, acid neutralizers and pH control agents, ion-recharging agents, chemotherapeutic agents, immune response modifiers, thixotropes, polyols, anti-inflammatory agents, antimicrobial agents, antifungal agents, agents for treating xerostomia, desensitizers, and the like, of the type often used in dental compositions. Combinations of any of the above therapeutic agents may be used.

In some embodiments, suitable therapeutic agents include re-mineralizing agents such as calcium, phosphorous, and fluoride compounds.

For example, in some embodiments, suitable calcium compounds in the hardenable liquid resin composition include, but are not limited to, calcium chloride, calcium carbonate, calcium caseinate, calcium chloride, calcium citrate, calcium glubionate, calcium gluceptate, calcium glycerophosphate, calcium gluconate, calcium hydroxide, calcium hydroxyapatite, calcium lactate, calcium oxalate, calcium oxide, calcium pantothenate, calcium phosphate, calcium polycarbophil, calcium propionate, calcium pyrophosphate, calcium sulfate, and mixtures and combinations thereof. These compounds have been found to minimize demineralization of calcium hydroxyapatite at the surface of the tooth of a patient.

In some embodiments, the tooth re-mineralizing compounds in the hardenable liquid resin composition include phosphate compounds. Suitable phosphate compounds include, but are not limited to, aluminum phosphate, bone phosphate, calcium phosphate, calcium orthophosphate, calcium phosphate dibasic anhydrous, calcium phosphate-bone ash, calcium phosphate dibasic dihydrate, calcium phosphate dibasic anhydrous, calcium phosphate dibasic dihydrate, calcium phosphate tribasic, dibasic calcium phosphate dihydrate, dicalcium phosphate, neutral calcium phosphate, precipitated calcium phosphate, tertiary calcium phosphate, tricalcium phosphate, whitlockite, magnesium phosphate, potassium phosphate, dibasic potassium phosphate, dipotassium hydrogen orthophosphate, dipotassium monophosphate, dipotassium phosphate, monobasic potassium phosphate, potassium acid phosphate, potassium biphosphate, potassium dihydrogen orthophosphate, potassium hydrogen phosphate, sodium phosphate, anhydrous sodium phosphate, dibasic sodium phosphate, disodium hydrogen orthophosphate, disodium hydrogen orthophosphate dodecahydrate, disodium hydrogen phosphate, disodium phosphate, and sodium orthophosphate.

Fluoride compounds incorporated into the mineral surface of a tooth help inhibit the demineralization of enamel and protect the tooth. Fluoride compounds absorbed into mineral surfaces of a tooth attract calcium and phosphate ions from saliva, or other sources, which results in the formation of fluorapatite and protects the tooth against demineralization. While not wishing to be bound by any theory, currently available evidence indicates that fluorapatite exhibits lower solubility than naturally occurring hydroxyapatite, which can help resist the inevitable acid challenge that teeth face daily.

Orthodontic patients are considered high risk for cavities over the course of their treatment. Commercial fluoride varnishes are very sticky by design and typically last a few hours on the enamel once applied. For an orthodontic patient wearing a dental appliance such as an aligner tray, this is undesirable since the varnish can interfere with the fit of the aligners on the arches of the patient, as well as adhere to the plastic that the aligners are made from and permanently warp or deform them. In one embodiment, for example, the liquid regions 14 on the structured surface 16 can be configured to deliver, when subsequently hardened, beneficial fluoride over a typical wear time for an alignment tray set (for example, 10-14 days), without compromising the fit of the alignment tray for the patient or ruining the polymeric material from which the alignment tray is made.

In some embodiments, the calcium compounds, phosphate compounds, fluoride compounds or combinations thereof, are present in the liquid regions in an amount sufficient such at least one of calcium, phosphate or fluoride can substantially reduce or prevent demineralization on the surface of the teeth of the patient during or exceeding a predetermined wear time.

The dental fillers used in the hardenable liquid composition are surface treated by methods similar to those described, for example, in U.S. Pat. No. 5,332,429 (Mitra et al.). In brief, the dental fillers can be surface treated by combining the filler with a liquid having a salt or other surface treating agent (e.g., fluoride ion precursors, silanes, titanates, and the like) dissolved, dispersed, or suspended therein. Optionally, the liquid includes water, and if an aqueous liquid is used, it can be acidic or basic. Once treated, at least a portion of the liquid can be removed from the surface treated dental filler using any convenient technique (e.g., spray drying, oven drying, gap drying, lyophilizing, and combinations thereof). See, for example, U.S. Pat. No. 5,980,697 (Kolb et al.) for a description of gap drying. In one embodiment, the treated fillers can be oven dried, typically at drying temperatures of about 30° to about 100° C., for example, overnight. The surface treated filler can be further heated as desired. The treated and dried dental filler can then be screened or lightly comminuted to break up agglomerates. The resulting surface treated dental filler can be incorporated into the hardenable liquid composition.

Dental fillers suitable for surface treatment can be selected from one or more of a wide variety of materials suitable for incorporation in compositions used for dental applications, such as fillers currently used in dental restorative compositions, and the like. In various embodiments the dental filler includes porous particles and/or porous agglomerates of particles, and in some cases the dental fillers include nanoparticles and/or agglomerates of nanoparticles. Preferred classes of dental fillers include metal oxides, metal fluorides, metal oxyfluorides, and combinations thereof, wherein the metal can be a heavy or non-heavy metal.

In preferred embodiments, the dental filler is an oxide, a fluoride, or an oxyfluoride of an element selected from elements such as, for example, Ca, Sr, Ba, Y, La, Ce, Pr, Nd, Pm, Sm Eu, Gd, Tb, Dy, Ho, Er, Tm Yb, Lu, Ti, Zr, Ta, Zn B, Al, Si, Sn, P, and mixtures and combinations thereof. The dental filler can be a glass, an amorphous material, or a crystalline material.

Optionally, the dental filler can include a source of fluoride ions, phosphorous ions or calcium ions. Such dental fillers include, for example, fluoroaluminosilicate glasses (FAS).

In some embodiments the filler is finely divided, and can have a unimodial or polymodial (e.g., bimodal) particle size distribution. In various example embodiments, the maximum particle size (the largest dimension of a particle, typically, the diameter) of the filler is less than 20 micrometers, or less than 10 micrometers, or less than 5 micrometers, and the average particle size of the filler is less than 2 micrometers, or less than 0.1 micrometers, or less than 0.075 micrometer.

The filler can be an inorganic material. It can also be a crosslinked organic material that is insoluble in the hardenable liquid composition, and is optionally filled with inorganic filler. The filler should in any event be nontoxic and suitable for use in the mouth. The filler can be radiopaque or radiolucent. The filler typically is substantially insoluble in water. Examples of suitable inorganic fillers are naturally occurring or synthetic materials including, but not limited to: quartz; nitrides (e.g., silicon nitride); glasses derived from, for example, Zr, Sr, Ce, Sb, Sn, Ba, Zn, and Al; feldspar; borosilicate glass; kaolin; talc; titania; low Mohs hardness fillers such as those described in U.S. Pat. No. 4,695,251 (Randklev); and submicron silica particles (e.g., pyrogenic silicas such as those available under the trade designations AEROSIL, including "OX 50," "130," "150" and "200" silicas from Degussa Corp., Akron, Ohio and CAB-O-SIL M5 silica from Cabot Corp., Tuscola, Ill.). Examples of suitable organic filler particles include filled or unfilled pulverized polycarbonates, polyepoxides, and the like.

In some embodiments, suitable non-acid-reactive filler particles include glass, quartz, submicron silica, and non-vitreous microparticles of the type described in U.S. Pat. No. 4,503,169 (Randklev). Mixtures of these non-acid-reactive fillers are also contemplated, as well as combination fillers made from organic and inorganic materials. In some example embodiments, silane-treated fillers such as, for example, silane treated glass, silane treated silica, and silane treated zirconia-silica (Zr-Si) fillers can be used.

The filler can also be an acid-reactive filler such as, for example metal oxides, glasses, and metal salts. Typical metal oxides include barium oxide, calcium oxide, magnesium oxide, and zinc oxide. Typical glasses include borate glasses, phosphate glasses, and fluoroaluminosilicate ("FAS") glasses. FAS glasses are particularly preferred. The FAS glass typically contains sufficient elutable cations so that a hardened dental composition will form when the glass is mixed with the components of the hardenable composition. The glass also typically contains sufficient elutable fluoride ions so that the hardened composition will have cariostatic properties. The glass can be made from a melt containing fluoride, alumina, and other glass-forming ingredients using techniques familiar to those skilled in the FAS glassmaking art. The FAS glass typically is in the form of particles that are sufficiently finely divided so that they can conveniently be mixed with the other cement components and will perform well when the resulting mixture is used in the mouth.

Generally, the average particle size (typically, diameter) for the FAS glass is no greater than about 12 micrometers, typically no greater than 10 micrometers, and more typically no greater than 5 micrometers as measured using, for example, a sedimentation analyzer. Suitable FAS glasses will be familiar to those skilled in the art, and are available from a wide variety of commercial sources, and many are found in currently available glass ionomer cements such as those commercially available under the trade designations VITREMER, VITREBOND, RELY X LUTING CEMENT, RELY X LUTING PLUS CEMENT, PHOTAC-FIL QUICK, KETAC-MOLAR, and KETAC-FIL PLUS (3M ESPE Dental Products, St. Paul, MN), FUJI II LC and FUJI IX (G-C Dental Industrial Corp., Tokyo, Japan) and CHEMFIL Superior (Dentsply International, York, Pa.). Mixtures of fillers can be used if desired.

Other suitable fillers are disclosed, for example, in U.S. Pat. Nos. 6,306,926 (Bretscher et al.), 6,387,981 (Zhang et al.), 6,572,693 (Wu et al.), and 6,730,156 (Windisch et al.), as well as WO 01/30307 (Zhang et al.) and WO 03/063804 (Wu et al.). Filler components described in these references include nanosized silica particles, nanosized metal oxide particles, and combinations thereof. Nanofillers are also described in U.S. Patent Nos. 7,156,911; 7,649,029; and 7,090,721.

In various embodiments, the hardenable liquid composition includes about 1 wt% to about 90 wt% surface treated dental filler or 2 wt% to 80 wt%, or 5 wt% to about 70 wt%, or about 10 wt% to about 50 wt%, or about 15 wt% to about 45 wt%, or about 20 wt% to about 40 wt%, or about 25 wt% to about 35 wt%, based on the total weight of the composition.

Optionally, the treated surface of the dental filler can further include a silane (e.g., as described, for example, in U.S. Pat. No. 5,332,429 (Mitra et al.)), an antibacterial agent (e.g., chlorhexidine; quaternary ammonium salts; metal containing compounds such as Ag, Sn, or Zn containing compounds; and combinations thereof), and/or a source of fluoride ions (e.g., fluoride salts, fluoride containing glasses, fluoride containing compounds, and combinations thereof).

The hardenable liquid composition can further include one or more nanofillers that impart the compositions with desirable aesthetic properties including, but not limited to, high optical translucency, and radio opacity for the placement of the filling composite and for the verification of retention and/or erosion. Suitable nanofillers may be either acid reactive or non-acid reactive and may include, but are not limited to silica; zirconia; oxides of titanium, aluminum, cerium, tin, yttrium, strontium, barium, lanthanum, zinc, ytterbium, bismuth, iron, and antimony; and combinations thereof. More typical nanofillers may include zirconia (ZrO₂); oxides of titanium (e.g., TiO₂) , and ytterbium (e.g., Y₂O₃); and other metal oxides with high refractive indices. As used herein, "high refractive index" means a refractive index of typically at least 1.5, and more typically of at least 2.0. Titania dioxide and zirconia are particularly useful nanofillers, as they have very high refractive indices, and will require less weight of material than a lower refractive index material to match the refractive indices appropriately.

The nanofiller is selected so that the refractive index of a combined mixture of the polyacid, the nanofiller, the water, and the optional polymerizable component is generally within 4 percent of the refractive index of the acid-reactive filler, typically within 3 percent thereof, more typically within 1 percent thereof, and even more typically within 0.5 percent thereof.

The nanofillers typically have an average particle size of at most 100 nanometers and more typically at most 50 nanometers. Such nanofillers typically have an average particle size of at least 2 nanometers, more typically at least 5 nanometers, and even more typically at least 10 nanometers. In some embodiments, the nanofiller is in the form of nanoclusters, typically at least 80 percent by weight nanoclusters. In other embodiments, the nanofiller is in the form of a combination of nanoparticles and nanoclusters. Often a portion of the surface of the nanofiller is silane treated or otherwise chemically treated to provide one or more desired physical properties. Suitable nanofillers are disclosed in U.S. Pat. No. 6,387,981 (Zhang et al.) and U.S. Pat. No. 6,572,693 (Wu et al.) as well as International Publication Nos. WO 01/30305 (Zhang et al.), WO 01/30306 (Windisch et al.), WO 01/30307 (Zhang et al.), and WO 03/063804 (Wu et al.). Filler components described in these references include nanosized silica particles, nanosized metal oxide particles, and combinations thereof.

Typically, the nanofillers are non-pyrogenic fillers, however pyrogenic fillers can be added as optional additives to the hardenable liquid compositions.

The amount of nanofiller should be sufficient to provide an ionomer composition having desirable mixing and handling properties before hardening and good physical and optical properties after hardening. Typically, the nanofiller represents at least 0.1 wt-%, more typically at least 5 wt-% or 10 wt-%, and most typically at least 20 wt-% based on the total weight of the composition. Typically, the nanofiller represents at most 80 wt-%, more typically at most 70 wt-%, and most typically at most 60 wt-%, based on the total weight of the composition.

The hardenable liquid composition used to form the discrete structures 14 include a resin matrix component that can be aqueous or non-aqueous. The compositions can be hardened, which in this application means polymerized by conventional photopolymerization and/or chemical polymerization techniques. In some example embodiments, the resin matrix includes at least one polyacid, an optional polymerizable component, and water.

The polyacids may be a non-curable or non-polymerizable polyacid, or a curable or polymerizable polyacid (e.g., a resin-modified polyacid). Typically, the polyacid is a polymer having a plurality of acidic repeating units and a plurality of polymerizable groups. In alternative embodiments, the polyacid may be substantially free of polymerizable groups. The polyacid needs not be entirely water soluble, but it should be at least sufficiently water-miscible so that it does not undergo substantial sedimentation when combined with other aqueous components. Suitable polyacids are listed in U.S. Pat. No. 4,209,434 (Wilson et al.). The polyacid should have a molecular weight sufficient to provide good storage, handling, and mixing properties. A typical weight average molecular weight is 5,000 to 100,000, evaluated against a polystyrene standard using gel permeation chromatography.

In one embodiment, the polyacid is a curable or polymerizable resin that contains at least one ethylenically unsaturated group. Suitable ethylenically unsaturated polyacids are described in U.S. Pat. No. 4,872,936 (Engelbrecht), e.g., at columns 3 and 4, and EP 323 120 B1 (Mitra), e.g., at page 3, line 55 to page 5, line 8. Typically, the numbers of acidic groups and ethylenically unsaturated groups are adjusted to provide an appropriate balance of properties in the dental composition. Polyacids in which 10% to 70% of the acidic groups have been replaced with ethylenically unsaturated groups are preferred.

In other embodiments, the polyacid is hardenable in the presence of, for example, an acid-reactive filler and water, but does not contain ethylenically unsaturated groups. That is, it is an oligomer or polymer of an unsaturated acid. Typically, the unsaturated acid is an oxyacid (i.e., an oxygen containing acid) of carbon, sulfur, phosphorous, or boron. More typically, it is an oxyacid of carbon. Such polyacids include, for example, polyalkenoic acids such as homopolymers and copolymers of unsaturated mono-, di-, or tricarboxylic acids. Polyalkenoic acids can be prepared by the homopolymerization and copolymerization of unsaturated aliphatic carboxylic acids, e.g., acrylic acid, 2-choloracrylic acid, 3-choloracrylic acid, 2-bromoacrylic acid, 3-bromoacrylic acid, methacrylic acid, itaconic acid, maleic acid, glutaconic acid, aconitic acid, citraconic acid, mesaconic acid, fumaric acid, and tiglic acid. Suitable monomers that can be copolymerized with the unsaturated aliphatic carboxylic acids include, for example, unsaturated aliphatic compounds such as acrylamide, acrylonitrile, vinyl chloride, allyl chloride, vinyl acetate, and 2-hydroxyethyl methacrylate. Ter- and higher polymers may be used if desired. Particularly preferred are the homopolymers and copolymers of acrylic acid. The polyalkenoic acid should be substantially free of unpolymerized monomers.

The amount of polyacid should be sufficient to react with the acid-reactive filler and to provide an ionomer composition with desirable hardening properties. Typically, the polyacid represents at least 1 wt-%, more typically at least 3 wt-%, and most typically at least 5 wt-%, based on the total weight of the unfilled composition. Typically, the polyacid represents at most 90 wt-%, more typically at most 60 wt-%, and most typically at most 30 wt-%, based on the total weight of the unfilled composition.

The polymerizable component can optionally be an ethylenically unsaturated compound with or without acid functionality. The polymerizable component can be part of a hardenable resin, which are generally thermosetting materials capable of being hardened to form a polymer network including, for example, acrylate-functional materials, methacrylate-functional materials, epoxy-functional materials, vinyl-functional materials, and mixtures thereof. In some embodiments, the hardenable resin is made from one or more matrix-forming oligomer, monomer, polymer, or blend thereof.

In certain embodiments where the composition disclosed in the present application is utilized in an oral environment, suitable polymerizable materials include hardenable organic materials having sufficient strength, hydrolytic stability, and non-toxicity to render them suitable for use in the oral environment. Examples of such materials include acrylates, methacrylates, urethanes, carbamoylisocyanurates, epoxies, and mixtures and derivatives thereof.

One class of preferred hardenable materials includes materials having polymerizable components with free radically active functional groups. Examples of such materials include monomers having one or more ethylenically unsaturated groups, oligomers having one or more ethylenically unsaturated groups, polymers having one or more ethylenically unsaturated groups, and combinations thereof.

In the class of hardenable resins having free radically active functional groups, suitable polymerizable components for use in the composition contain at least one ethylenically unsaturated bond, and are capable of undergoing addition polymerization. Such free radically ethylenically unsaturated compounds include, for example, mono-, di- or poly-(meth)acrylates (i.e., acrylates and methacrylates) such as, methyl (meth)acrylate, ethyl acrylate, isopropyl methacrylate, n-hexyl acrylate, stearyl acrylate, allyl acrylate, glycerol triacrylate, ethyleneglycol diacrylate, diethyleneglycol diacrylate, triethyleneglycol dimethacrylate, 1,3-propanediol di(meth)acrylate, trimethylolpropane triacrylate, 1,2,4-butanetriol trimethacrylate, 1,4-cyclohexanediol diacrylate, pentaerythritol tetra(meth)acrylate, sorbitol hexacrylate, tetrahydrofurfuryl (meth)acrylate, bis[1-(2-acryloxy)]-p-ethoxyphenyldimethylmethane, bis[1-(3-acryloxy-2-hydroxy)]-p-propoxyphenyldimethylmethane, ethoxylated bisphenol A di(meth)acrylate, and trishydroxyethyl-isocyanurate trimethacrylate; (meth)acrylamides (i.e., acrylamides and methacrylamides) such as (meth)acrylamide, methylene bis-(meth)acrylamide, and diacetone (meth)acrylamide; urethane (meth)acrylates; the bis-(meth)acrylates of polyethylene glycols (preferably of molecular weight 200-500); copolymerizable mixtures of acrylated monomers such as those in U.S. Pat. No. 4,652, 274 (Boettcher et al.); acrylated oligomers such as those disclosed in U.S. Pat. No. 4,642,126 (Zador et al.); and vinyl compounds such as styrene, diallyl phthalate, divinyl succinate, divinyl adipate and divinyl phthalate. Other suitable free radically polymerizable compounds include siloxane-functional (meth)acrylates as disclosed, for example, in WO00/38619 (Guggenberger et al.), WO01/92271 (Weinmann et al.), WO01/07444 (Guggenberger et al.), WO00/42092 (Guggenberger et al.) and fluoropolymer-functional (meth)acrylates as disclosed, for example, in U.S. Pat. Nos. 5,076,844 (Fock et al.), and 4,356,296 (Griffith et al.), EP-0 373 384 (Wagenknecht et al.), EP-0 201 031 (Reiners et al.), and EP-0 201 778 (Reiners et al.). Mixtures of two or more free radically polymerizable compounds can be used if desired.

The polymerizable component may also contain hydroxyl groups and free radically active functional groups in a single molecule. Examples of such materials include hydroxyalkyl (meth)acrylates, such as 2-hydroxyethyl (meth)acrylate and 2-hydroxypropyl (meth)acrylate; glycerol mono- or di-(meth)acrylate; trimethylolpropane mono- or di-(meth)acrylate; pentaerythritol mono-, di-, and tri-(meth)acrylate; sorbitol mono-, di-, tri-, tetra-, or penta-(meth)acrylate; and 2,2-bis[4-(2-hydroxy-3-methacryloxypropoxy)phenyl]propane (bisGMA). Suitable ethylenically unsaturated compounds are also available from a wide variety of commercial sources, such as Sigma-Aldrich, St. Louis, MO. Mixtures of ethylenically unsaturated compounds can be used if desired.

When present, the polymerizable component optionally includes an ethylenically unsaturated compound with acid functionality. Preferably, the acid functionality includes an oxyacid (i.e., an oxygen-containing acid) of carbon, sulfur, phosphorous, or boron.

Such compounds include, for example, α,β-unsaturated acidic compounds such as glycerol phosphate monomethacrylates, glycerol phosphate dimethacrylates, hydroxyethyl methacrylate phosphates, citric acid di- or tri-methacrylates, poly(meth)acrylated oligomaleic acid, poly(meth)acrylated polymaleic acid, poly(meth)acrylated poly(meth)acrylic acid, poly(meth)acrylated polycarboxyl-polyphosphonic acid, poly(meth)acrylated polychlorophosphoric acid, poly(meth)acrylated polysulfonic acid, poly(meth)acrylated polyboric acid, and the like, may be used as components in the hardenable resin system.

Certain of these compounds are obtained, for example, as reaction products between isocyanatoalkyl (meth)acrylates and carboxylic acids. Additional compounds of this type having both acid-functional and ethylenically unsaturated components are described in U.S. Pat. Nos. 4,872,936 (Engelbrecht) and 5,130,347 (Mitra). A wide variety of such compounds containing both the ethylenically unsaturated and acid moieties can be used. Mixtures of such compounds can be used if desired.

Additional ethylenically unsaturated compounds with acid functionality include, for example, polymerizable bisphosphonic acids as disclosed for example, in U.S. Patent Publication No. 2004-0206932; AA:ITA:IEM (copolymer of acrylic acid:itaconic acid with pendent methacrylate made by reacting AA:ITA copolymer with sufficient 2-isocyanatoethyl methacrylate to convert a portion of the acid groups of the copolymer to pendent methacrylate groups as described, for example, in Example 11 of U.S. Pat. No. 5,130,347 (Mitra)); and those recited in U.S. Pat. Nos. 4,259,075 (Yamauchi et al.), 4,499,251 (Omura et al.), 4,537,940 (Omura et al.), 4,539,382 (Omura et al.), 5,530,038 (Yamamoto et al.), 6,458,868 (Okada et al.), and European Pat. Application Publication Nos. EP 712,622 (Tokuyama Corp.) and EP 1,051,961 (Kuraray Co., Ltd.).

When ethylenically unsaturated compounds with acid functionality are present, the hardenable liquid compositions typically include at least 1% by weight, more typically at least 3% by weight, and most typically at least 5% by weight ethylenically unsaturated compounds with acid functionality, based on the total weight of the unfilled composition. Typically, compositions of the present composition include at most 50% by weight, more typically at most 40% by weight, and most typically at most 30% by weight ethylenically unsaturated compounds with acid functionality, based on the total weight of the unfilled composition.

Partial or complete hardening of the composition may occur through an acid-reactive filler/polyacid reaction (i.e., an acid/base reaction). In certain embodiments, the composition also contains a photoinitiator system that upon irradiation with actinic radiation initiates the polymerization (or hardening) of the composition. Such photopolymerizable compositions can be free radically polymerizable.

For free radical polymerization (e.g., hardening), an initiation system can be selected from systems that initiate polymerization via radiation, heat, or redox/auto-cure chemical reaction. A class of initiators capable of initiating polymerization of free radically active functional groups includes free radical-generating photoinitiators, optionally combined with a photosensitizer or accelerator. Such initiators typically can be capable of generating free radicals for addition polymerization upon exposure to light energy having a wavelength between 200 and 800 nm.

Suitable photoinitiators (i.e., photoinitiator systems that include one or more compounds) for polymerizing free radically photopolymerizable compositions include binary and ternary systems. Typical ternary photoinitiators include an iodonium salt, a photosensitizer, and an electron donor compound as described in U.S. Pat. No. 5,545,676 (Palazzotto et al.). Preferred iodonium salts are the diaryl iodonium salts, e.g., diphenyliodonium chloride, diphenyliodonium hexafluorophosphate, diphenyliodonium tetrafluoroborate, and tolylcumyliodonium tetrakis(pentafluorophenyl) borate. Preferred photosensitizers are monoketones and diketones that absorb some light within a range of about 400 nm to 520 nm (preferably, 450 nm to 500 nm). More preferred compounds are alpha diketones that have some light absorption within a range of 400 nm to 520 nm (even more preferably, 450 to 500 nm). Preferred compounds are camphorquinone, benzil, furil, 3,3,6,6-tetramethylcyclohexanedione, phenanthraquinone, 1-phenyl-1,2-propanedione, and other 1-aryl-2-alkyl-1,2 ethanediones, and cyclic alpha diketones. Most preferred is camphorquinone. Preferred electron donor compounds include substituted amines, e.g., ethyl dimethylaminobenzoate. Other suitable ternary photoinitiator systems useful for photopolymerizing cationically polymerizable resins are described, for example, in U.S. Patent 6,765,036 (Dede et al.).

Other suitable photoinitiators for polymerizing free radically photopolymerizable compositions include the class of phosphine oxides that typically have a functional wavelength range of 380 nm to 1200 nm. Preferred phosphine oxide free radical initiators with a functional wavelength range of 380 nm to 450 nm are acyl and bisacyl phosphine oxides such as those described in U.S. Pat. No. 4,298,738 (Lechtken et al.), U.S. Pat. No. 4,324,744 (Lechtken et al.), U.S. Pat. No. 4,385,109 (Lechtken et al.), U.S. Pat. No. 4,710,523 (Lechtken et al.), and U.S. Pat. No. 4,737,593 (Ellrich et al.), U.S. Pat. No. 6,251,963 (Kohler et al.); and EP Application No. 0 173 567 A2 (Ying).

Commercially available phosphine oxide photoinitiators capable of free-radical initiation when irradiated at wavelength ranges of greater than 380 nm to 450 nm include, for example, bis(2,4,6-trimethylbenzoyl)phenyl phosphine oxide available under the trade designation IRGACURE 819 from Ciba Specialty Chemicals, Tarrytown, N.Y.; bis(2,6-dimethoxybenzoyl)-(2,4,4-trimethylpentyl) phosphine oxide available under the trade designation CGI 403 from Ciba Specialty Chemicals; a 25:75 mixture, by weight, of bis(2,6-dimethoxybenzoyl)-2,4,4-trimethylpentyl phosphine oxide and 2-hydroxy-2-methyl-1-phenylpropan-1-one available under the trade designation IRGACURE 1700 from Ciba Specialty Chemicals; a 1:1 mixture, by weight, of bis(2,4,6-trimethylbenzoyl)phenyl phosphine oxide and 2-hydroxy-2-methyl-1-phenylpropane-1-one available under the trade designation DAROCUR 4265 from Ciba Specialty Chemicals; and ethyl 2,4,6-trimethylbenzylphenyl phosphinate available under the trade designation LUCIRIN LR8893X from BASF Corp., Charlotte, N.C.

Typically, the phosphine oxide initiator is present in the photopolymerizable composition in catalytically effective amounts, such as from 0.1% by weight to 5% by weight, based on the total weight of the composition.

Tertiary amine reducing agents may be used in combination with an acylphosphine oxide. Illustrative suitable tertiary amines include ethyl 4-(N,N-dimethylamino)benzoate and N,N-dimethylaminoethyl methacrylate. When present, the amine reducing agent is present in the photopolymerizable composition in an amount from 0.1% by weight to 5% by weight, based on the total weight of the composition. Useful amounts of other initiators are well known to those of skill in the art.

Another free-radical initiator system that can alternatively be used in the hardenable liquid composition include the class of ionic dye-counterion complex initiators including a borate anion and a complementary cationic dye. Borate salt photoinitiators are described, for example, in U. S. Pat. No. 4,772,530 (Gottschalk et al.), U.S. Pat. No. 4,954,414 (Adair et al.), U.S. Pat. No. 4,874,450 (Gottschalk), U.S. Pat. No. 5,055,372 (Shanklin et al.), and U.S. Pat. No. 5,057,393 (Shanklin et al.).

The hardenable resins can include redox cure systems that include a polymerizable component (e.g., an ethylenically unsaturated polymerizable component) and redox agents that include an oxidizing agent and a reducing agent. Suitable polymerizable components and redox agents that are useful in the present composition are described in U.S. Patent Nos. 7,173,074 (Mitra et al.) and 6,982,288 (Mitra et al.).

The reducing and oxidizing agents should react with or otherwise cooperate with one another to produce free-radicals capable of initiating polymerization of the resin system (e.g., the ethylenically unsaturated component). This type of cure is a dark reaction, that is, it is not dependent on the presence of light and can proceed in the absence of light. The reducing and oxidizing agents are preferably sufficiently shelf-stable and free of undesirable colorization to permit their storage and use under typical dental conditions. They should be sufficiently miscible with the resin system (and preferably water-soluble) to permit ready dissolution in (and discourage separation from) the other components of the polymerizable composition.

Useful reducing agents include, for example, ascorbic acid, ascorbic acid derivatives, and metal complexed ascorbic acid compounds as described in U.S. Pat. No. 5,501,727 (Wang et al.); amines, especially tertiary amines, such as 4-tert-butyl dimethylaniline; aromatic sulfinic salts, such as p-toluenesulfinic salts and benzenesulfinic salts; thioureas, such as 1-ethyl-2-thiourea, tetraethyl thiourea, tetramethyl thiourea, 1,1-dibutyl thiourea, and 1,3-dibutyl thiourea; and mixtures thereof. Other secondary reducing agents may include cobalt (II) chloride, ferrous chloride, ferrous sulfate, hydrazine, hydroxylamine (depending on the choice of oxidizing agent), salts of a dithionite or sulfite anion, and combinations thereof. Preferably, the reducing agent is an amine.

Suitable oxidizing agents will also be familiar to those skilled in the art, and include, for example, persulfuric acid and salts thereof, such as sodium, potassium, ammonium, cesium, and alkyl ammonium salts. Additional oxidizing agents include, for example, peroxides such as benzoyl peroxides, hydroperoxides such as cumyl hydroperoxide, t-butyl hydroperoxide, and amyl hydroperoxide, as well as salts of transition metals such as cobalt (III) chloride and ferric chloride, cerium (IV) sulfate, perboric acid and salts thereof, permanganic acid and salts thereof, perphosphoric acid and salts thereof, and combinations thereof.

It may be desirable to use more than one oxidizing agent or more than one reducing agent. Small quantities of transition metal compounds may also be added to accelerate the rate of redox cure. In some embodiments it may be preferred to include a secondary ionic salt to enhance the stability of the hardenable composition as described, for example, in U.S. Patent No. 6,982,288 (Mitra et al.).

The reducing and oxidizing agents are present in amounts sufficient to permit an adequate free-radical reaction rate. This can be evaluated by combining all of the ingredients of the hardenable composition except for the filler, and observing whether or not a hardened mass is obtained. In some example embodiments, the reducing agent is present in an amount of at least 0.01% by weight, and more preferably at least 0.10% by weight, based on the total weight (including water) of the components of the hardenable composition. In some example embodiments, the reducing agent is present in an amount of no greater than 10% by weight, and more preferably no greater than 5% by weight, based on the total weight (including water) of the components of the polymerizable composition.

In some embodiments, the oxidizing agent is present in an amount of at least 0.01% by weight, and more preferably at least 0.10% by weight, based on the total weight (including water) of the components of the polymerizable composition. In some embodiments, the oxidizing agent is present in an amount of no greater than 10% by weight, and more preferably no greater than 5% by weight, based on the total weight (including water) of the components of the hardenable composition.

The reducing or oxidizing agents can be microencapsulated as described, for example, in U.S. Pat. No. 5,154,762 (Mitra et al.). This will generally enhance shelf stability of the polymerizable composition, and if necessary permit packaging the reducing and oxidizing agents together. For example, through appropriate selection of an encapsulant, the oxidizing and reducing agents can be combined with an acid-functional component and optional filler and kept in a storage-stable state. Likewise, through appropriate selection of a water-insoluble encapsulant, the reducing and oxidizing agents can be combined with an FAS glass and water and maintained in a storage-stable state.

In a further alternative, heat may be used to initiate the hardening, or polymerization, of free radically active groups. Examples of heat sources suitable for the dental materials of the composition include inductive, convective, and radiant. Thermal sources should be capable of generating temperatures of at least 40° C. and at most 150° C. under normal conditions or at elevated pressure. This procedure is preferred for initiating polymerization of materials occurring outside of the oral environment.

Yet another alternative class of initiators capable of initiating polymerization of free radically active functional groups in the hardenable resin are those that include free radical-generating thermal initiators. Examples include peroxides (e.g., benzoyl peroxide and lauryl peroxide) and azo compounds (e.g., 2,2-azobis-isobutyronitrile (AIBN)).

Photoinitiator compounds are preferably provided in dental compositions disclosed in the present application in an amount effective to initiate or enhance the rate of cure or hardening of the resin system. Useful photopolymerizable compositions are prepared by simply admixing, under safe light conditions, the components as described above. Suitable inert solvents may be used, if desired, when preparing this mixture. Any solvent that does not react appreciably with the components of the inventive compositions may be used. Examples of suitable solvents include, for example, acetone, dichloromethane, and acetonitrile.

The hardenable liquid compositions contain water, which should be present in the composition in an amount sufficient to provide adequate handling and mixing properties and to permit the transport of ions, particularly in the filler-acid reaction. Preferably, water represents at least 2 wt-%, and more preferably at least 5 wt-%, of the total weight of ingredients used to form the composition. Preferably, water represents no greater than 90 wt-%, and more preferably no greater than 80 wt-%, of the total weight of ingredients used to form the composition.

In addition to the dental filler and the nanofiller components, the compositions can also optionally include one or more other fillers. Such fillers may be selected from one or more of a wide variety of materials suitable for the use in dental and/or orthodontic compositions. The other filler can be an inorganic material. It can also be a crosslinked organic material that is insoluble in the resin component of the composition, and is optionally filled with inorganic filler. The filler should in any event be nontoxic and suitable for use in the mouth. The filler can be radiopaque or radiolucent. The filler typically is substantially insoluble in water. Examples of suitable inorganic fillers are naturally occurring or synthetic materials including, but not limited to: quartz; nitrides (e.g., silicon nitride); glasses derived from, for example, Zr, Sr, Ce, Sb, Sn, Ba, Zn, and Al; feldspar; borosilicate glass; kaolin; talc; titania; low Mohs hardness fillers such as those described in U.S. Pat. No. 4,695,251 (Randklev); and silica particles (e.g., submicron pyrogenic silicas such as those available under the trade designations AEROSIL, including "OX 50," "130," "150" and "200" silicas from Degussa AG, Hanau, Germany and CAB-O-SIL M5 silica from Cabot Corp., Tuscola, Ill.). Examples of suitable organic filler particles include filled or unfilled pulverized polycarbonates, polyepoxides, and the like. Suitable filler particles are quartz, submicron silica, and non-vitreous microparticles of the type described in U.S. Pat. No. 4,503,169 (Randklev). Mixtures of these non-acid-reactive fillers are also contemplated, as well as combination fillers made from organic and inorganic materials.

The surface of the filler particles can also be treated with a coupling agent in order to enhance the bond between the filler and the resin. The use of suitable coupling agents include gamma-methacryloxypropyltrimethoxysilane, gamma-mercaptopropyltriethoxysilane, gamma-aminopropyltrimethoxysilane, and the like. Examples of useful silane coupling agents are those available from Crompton Corporation, Naugatuck, Conn., as SILQUEST A-174 and SILQUEST A-1230. For some embodiments of the hardenable liquid composition that include other fillers (e.g., dental restorative compositions), the compositions may include at least 1% by weight, more preferably at least 2% by weight, and most preferably at least 5% by weight other filler, based on the total weight of the composition. For such embodiments, compositions of the present composition preferably include at most 40% by weight, more preferably at most 20% by weight, and most preferably at most 15% by weight other filler, based on the total weight of the composition.

Optionally, the hardenable compositions may contain other solvents, cosolvents (e.g., alcohols) or diluents. If desired, the hardenable composition can contain additives such as indicators, dyes, pigments, inhibitors, accelerators, viscosity modifiers, wetting agents, tartaric acid, chelating agents, surfactants, buffering agents, stabilizers, and other similar ingredients that will be apparent to those skilled in the art. Additionally, medicaments or other therapeutic substances can be optionally added to the dental compositions. Examples include, but are not limited to, fluoride sources, whitening agents, anticaries agents (e.g., xylitol), remineralizing agents (e.g., calcium phosphate compounds), enzymes, breath fresheners, anesthetics, clotting agents, acid neutralizers, chemotherapeutic agents, immune response modifiers, thixotropes, polyols, anti-inflammatory agents, antimicrobial agents, antifungal agents, agents for treating xerostomia, desensitizers, and the like, of the type often used in dental compositions.

The hardenable liquid compositions can be prepared by combining all the various components using conventional mixing techniques. As discussed above, the compositions may be partially or fully hardened by an ionic reaction between an acid-reactive filler and a polyacid. Optionally, the compositions may contain a polymerizable component and a photoinitiator and be hardened by photoinitiation, or may be partially or fully hardened by chemical polymerization such as a redox cure system in which the composition contains a free-radical initiator system, e.g., including an oxidizing agent and a reducing agent. Alternatively, the hardenable composition may contain different initiator systems, such that the composition can be both a photopolymerizable and a chemically polymerizable composition, as well as an ionically hardenable composition.

The hardenable compositions can be supplied in a variety of forms including one-part systems and multi-part systems, e.g., two-part powder/liquid, paste/liquid, paste/powder and paste/paste systems. Other forms employing multi-part combinations (i.e., combinations of two or more parts), each of which is in the form of a powder, liquid, gel, or paste are also possible. The various components of the composition may be divided up into separate parts in whatever manner is desired; however, the polyacid, dental filler and water generally would not all be present in the same part, although any two of these may be grouped together in the same part along with any combination of other components. Furthermore, in a redox multi-part system, one part typically contains the oxidizing agent and another part typically contains the reducing agent. However, the reducing agent and oxidizing agent could be combined in the same part of the system if the components are kept separated, for example, through use of microencapsulation.

In some embodiments, two-part dental compositions of the present composition can be provided in a dual barrel syringe having a first barrel and a second barrel, wherein the part A resides in the first barrel and the part B resides in the second barrel. In other embodiments, two-part dental compositions can be provided in a unit-dose capsule. In some embodiments, each part of a multi-part dental system can be mixed together using a static mixer.

Suitable GI/RMGI compositions are commercially available under the trade designations VITREMER, VITREBOND, RELYX Luting Cement, RELYX Luting Plus Cement, PHOTAC-FIL QUICK, KETAC-MOLAR, KETAC-FIL PLUS and VANISH XT VARNISH from 3M, St Paul, MN, Fuji II LC and Fuji IX (GC Dental Industrial Corp, Tokyo, Japan) and Chemfil Superior (Dentsply Intl, York, PA). The delivery mode of these materials can be varnish, sealant, powder-liquid, single-paste, liquid-paste and paste-paste systems. Suitable compounds are described in US Patent Nos. 10,137,061; 4,871,786; 9,132,069; 8,129,444; 7,632,098; and 6,444,725; US Patent 10,080,708, U.S. Provisional Application No. 62/773244, WO2019/234661, and WO2019/234633.

In some embodiments, the hardenable liquid composition is a photocurable RMGI coating available from 3M, St. Paul, MN, under the trade designation VANISH XT VARNISH Durable Fluoride-Releasing Coating, which has heretofore been used for application to tooth and enamel surfaces to treat exposed root surface sensitivity and to provide site specific protection for high risk, caries prone areas including non-cavitating lesions. The VANISH XT Varnish provides sustained fluoride and calcium phosphate release, and presently available evidence indicates that at least one of F, Ca and P ions release from VANISH XT varnish over a period of more than 200 days. The VANISH XT Varnish RMGI can intermittently be recharged of its F, Ca and P ions with dentifrice such as those available from 3M, St. Paul, MN under the trade designations CLINPRO 5000, and the like, or with an aqueous buffered fluoride solution such as, for example, a 1-2% sodium fluoride gel.

In various embodiments, the therapeutic agents released from the structures 24 can vary between areas on the major surfaces of the dental appliance 20, and even within a single region. For example, the therapeutic agents released by the structures 24 in a first area of the surfaces 25, 27 of the dental appliance 20 can be different from the therapeutic agents released from the structures 24 in a second area of the surfaces 25, 27, e.g., fluoride in the first area and phosphate or calcium in the second area. In other examples, the therapeutic agents released from the structures 24 within the first area can differ from one another, e.g., fluoride and phosphate could be released from different structures 24 in the first area. In another embodiment, the therapeutic agents within the structures 24 can be released at a different concentration between regions and within a selected region.

In another embodiment, the therapeutic agents provided by the liquid regions 14 and the corresponding structures 24 can be releasable over a predetermined patient wear time of the dental appliance 20. The therapeutic agents may be released over a period of seconds, minutes, hours, days, weeks, or months, and in some embodiments, which are not intended to be limiting, are released over a typical treatment time for an orthodontic device such as, for about 1-2 weeks, or 10 days to 14 days. In addition, different regions of the orthodontic appliance can have therapeutic agents with varying predetermined release periods. For example, one region may have a release period on the order of seconds, and another different region may have a release period on the order of months.

In another embodiment, the liquid regions 14 and the corresponding structures 24 can be configured to absorb and release therapeutic agents. For example, calcium and/or phosphorus can be absorbed from saliva and released over time. In another example, fluoride, calcium, tin, and/or phosphorus in the structures can be recharged from oral care products (e.g., toothpaste and rinse) and re-released at a tooth surface over time.

In another embodiment, the liquid regions 14 or the corresponding structures 24 can be configured to facilitate unhindered flow of salivary fluids and other fluids to enhance and/or maintain hard tissue health. For example, when a tooth surface undergoes demineralization instigated by oral bacteria, dietary choices, xerostomia, etc., the structures 24 can provide open channels for the saliva to hydrate and re-mineralize the tooth surface.

As noted above, the liquid regions 14 can be applied on the surfaces 15, 17 by any suitable printing technique. In some non-limiting examples, screen printing is a printing technique in which a mesh is used to transfer a liquid composition, referred to as an ink, onto a substrate, except in areas made impermeable to the ink by a blocking stencil. A blade or squeegee is moved across the screen to fill the open mesh apertures with ink, and a reverse stroke then causes the screen to touch the substrate momentarily along a line of contact. This causes the ink to wet the substrate and be pulled out of the mesh apertures as the screen springs back after the blade has passed. One color is printed at a time, so several screens can be used to produce a multicolored image or design. Screen printing is particularly useful in forming liquid regions 14 with varying heights or spacings above the surfaces 15, 17. For example, in some embodiments the spacing of apertures in the screen, or the thickness of the screen, or both, can be varied to form arrays of liquid regions with corresponding spacings or heights above the surfaces 15, 17.

In another non-limiting example, a flexographic print is made by creating a positive mirrored master of the required image as a 3D relief in a rubber or polymeric material, which is referred to as a flexographic printing plate. The image areas on the flexographic printing plate are raised above the non-image areas on the plate. Printing ink is transferred to the image areas of the flexographic plate via an anilox roll (composed of cells filled with ink, usually by a blading ink into the anilox roll cells), and then the ink is transferred to the substrate by contacting the "inked" flexographic plate to the substrate. Ink is only transferred from the relief features of the flexographic plate to the substrate.

Referring again to FIG. 1, as noted above, after printing the liquid regions 14 are subsequently at least partially hardened to form a pattern 22 of discrete structures 24 on either or both major surfaces 25, 27 of the substrate 26. The pattern 22 of the discrete structures 24 substantially corresponds to the pattern 12 of discrete liquid regions 14.

As shown schematically in FIG. 1, a plurality of cavities may then be formed in the substrate 16 to form the orthodontic appliance 20, wherein the cavities are configured to receive one or more teeth. The cavities may be formed by any suitable technique, including thermoforming, laser processing, chemical or physical etching, and combinations thereof. The liquid regions 14 may be hardened to form the structures 24 prior to, during, or after, the substrate 16 is formed into the dental appliance 20.

In another embodiment (not shown in FIG. 1), the orthodontic dental appliance 20 may be formed using a three-dimensional (3D) printing process (e.g., additive manufacturing), such as stereolithography, and then liquid regions 14 may be applied and hardened to form the structures 24 after the substrate 16 is formed into the dental appliance 20.

In some embodiments, the cavities are formed in the sheet of polymeric material 16 under processing conditions such that the pattern 22 and the structures 24 are not substantially distorted. For example, in some embodiments, the substrate 16 may be thermoformed at a temperature and pressure which distorts the structures 24 by less than about 100%, or less than about 50%, in any dimension (for example, diameter, height, and the like). In some embodiments, the substrate 16 may be thermoformed at a temperature and a pressure such that an image formed by the array of structures 22 is not substantially distorted, which means that the image is still recognizable at a normal viewing distance. In some embodiments, the conditions in the thermoforming step may be utilized to change a first pattern of the structures 24 into a second pattern of structures 24 different from the first pattern. In some embodiments, the second pattern of structures 24 differs from the first pattern in that a substantially continuous first pattern stretches and becomes a substantially discontinuous pattern during the thermoforming step.

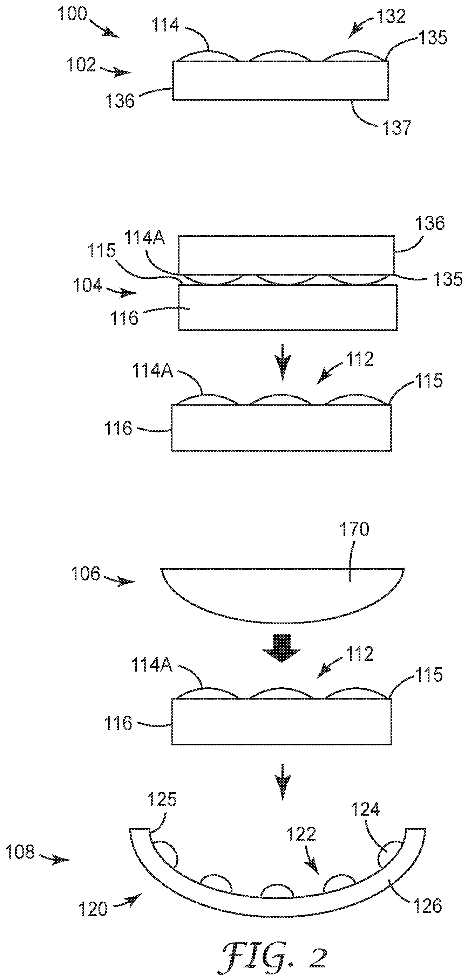

In an alternative embodiment, an indirect printing process 100 depicted schematically in FIG. 2 may be used to form a pattern of liquid regions on a substrate. In step 102, a pixelated pattern 132 including discrete liquid regions 114 of a hardenable liquid composition is printed on at least one major release surface 135, 137 of a substrate 136 by a suitable printing process such as, for example, screen printing, flexographic printing, and combinations thereof, as described in detail above.

The release surface 135 may be selected from any material from which the liquid regions 114 can release and cleanly transfer from the surface 135 to another substrate. In some embodiments, the release surface 135 is a surface of a low surface energy material such as, for example, silicones, fluorinated compounds, radiation curable inks, and the like. Silicone acrylates have been found to be particularly suitable. In another embodiment, the release surface 135 may include a release layer of a low surface energy material on a support (not shown in FIG. 2) such as, for example, a silicone layer overlying a paper support. In another embodiment, the release surface 135 may be a surface of a polymeric film. In some embodiments, the release properties of the surface of the polymeric film can optionally be chemically treated or modified by ozonation, corona discharge, application of silane coupling agents, application of primers, and combinations thereof, as needed for a particular application.

Referring now to step 104 of FIG. 2, the liquid regions 114 are at least partially hardened, or fully hardened to form structures 114A, and the release substrate 136 is applied to a substrate 116 such that the structures 114A contact a surface 115 of a substrate 116. In various embodiments, the release substrate 136 may be laminated to a polymeric film substrate 116, or a polymeric film substrate may be coated onto the release substrate 136.

The release substrate 136 is then peeled away and removed so that the structures 114A cleanly transfer from the release surface 135 to the surface 115 to form a pixelated pattern 112 of structures 114A thereon substantially corresponding to the pattern 132. The lamination step 104 may optionally include at least one of heating or pressure to facilitate the transfer of the at least partially hardened liquid regions 114A from the release surface 135 to the surface 115.

In steps 106 and 108, the substrate 116 including the pattern of structures 114A is contacted with a thermal mold 170 and formed into a dental appliance 120 that includes a plurality of cavities (not shown in FIG. 2) configured to retain one or more teeth of a patient. Once released from the mold 170, the dental appliance 120 includes a pattern 122 of discrete structures 124 on a surface 125 of a substrate 126. The pattern 122 of discrete structures 124 corresponds to the pattern 112 of discrete liquid regions 114 and structures 114A. When contacted with the thermal mold 170, the structures 114A are preferably sufficiently hardened such that the liquid regions 114A do not split between the mold 170 and surface 125 of the substrate 126.

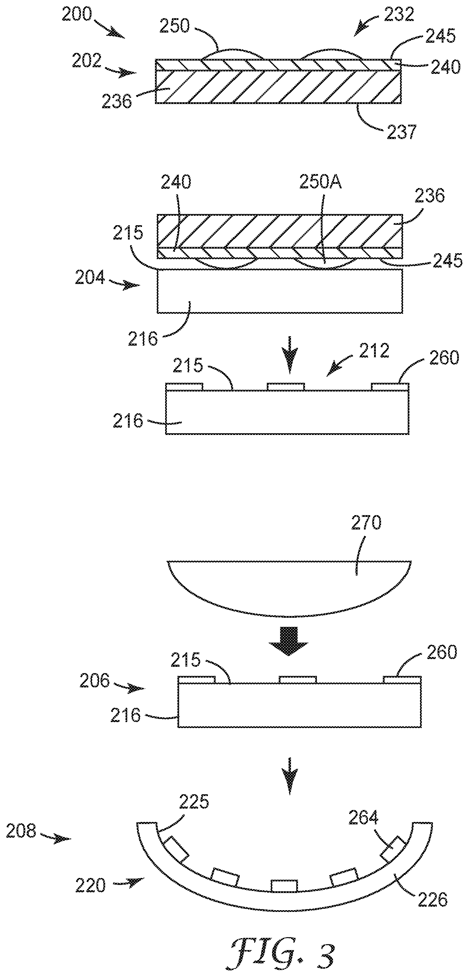

In another embodiment, an indirect printing process 200 depicted schematically in FIG. 3 may be used to form a pattern of liquid regions on a substrate. In step 202, a pixelated pattern 232 including discrete liquid regions 250 of a release material are applied to a major surface 245 of a transfer layer 240 on a transfer substrate 236 by at least one suitable printing process as described in detail above. The transfer layer 240 includes a polymeric resin matrix and at least one surface treated dental filler as described in detail above.

As shown in step 204 of FIG. 3, after the liquid regions 250 are at least partially hardened to form release structures 250A, the transfer substrate 236 is contacted with a polymeric film substrate 216 such that the release structures 250A contact and transfer to a major surface 215 thereof. The lamination step 204 may optionally include at least one of heating or pressure to facilitate the transfer of the portions of the transfer layer 240 from the surface 245 to the surface 215. In another embodiment (not shown in FIG. 3), the polymeric film substrate 216 may be coated onto the transfer substrate 236, thereby transferring the release structures 250A to the surface 215 of the substrate 216.

The transfer substrate 236 is then peeled away so that the portions of the transfer layer 240 not overlain by the release structures 250A transfer to the surface 215 of the substrate 216 to form a pixelated pattern 212 of discrete structures 260. Substantially none of the transfer layer 240 is transferred to the surface 215 in regions occupied by the release structures 250A. The pixelated pattern 212 on the surface 215 of the substrate 216 substantially corresponds to an inverse of the pattern 232 of the release structures 250A. In steps 206 and 208, the substrate 216 including the pattern 212 of structures 260 is contacted with a heated mold 270 and formed into a dental appliance 220 that includes a plurality of cavities (not shown in FIG. 3) configured to retain one or more teeth of a patient. Once released from the mold 270, the dental appliance 220 includes a pattern 212 of discrete structures 264 on a surface 225 of a substrate 226. The pattern 212 of discrete structures 264 corresponds to the pattern 212 of structures 260. The pixelated structures 260 may be hardened to form the structures 264 prior to, during, or after, the substrate 216 is formed into the dental appliance 220.

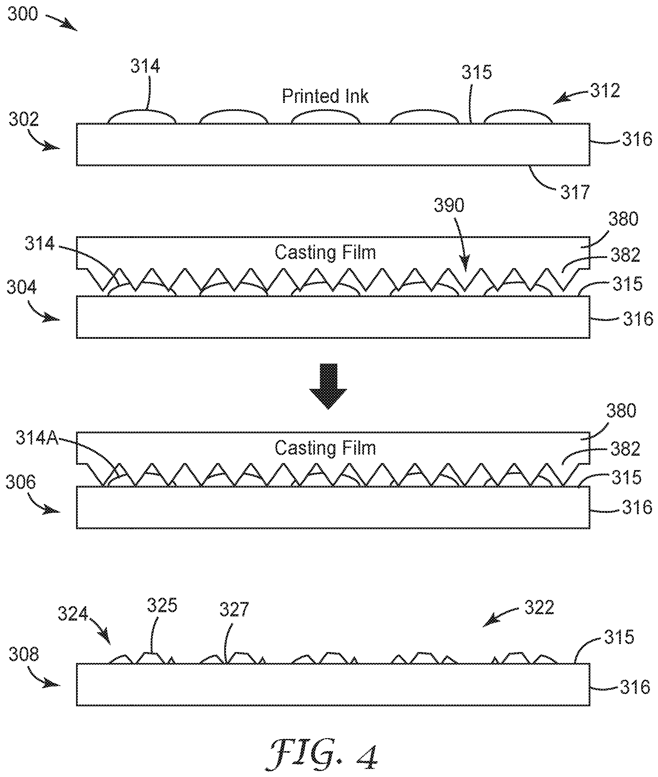

FIG. 4 is a schematic depiction of another embodiment of a direct patterning process 300 that may be used to form a dental appliance. In a first step 302 a pixelated pattern 312 including discrete liquid regions 314 of a hardenable liquid resin composition as described above is applied to at least one major surface 315, 317 of a substrate 316 by at least one suitable printing process. As above, suitable examples include, but are not limited to, screen printing, flexographic printing, ink jet printing, gravure printing, pad printing, and combinations thereof.

In a second step 304, a casting film 380 including a pattern 390 of microstructures 382 is contacted with the substrate 316 so that the structures 382 contact the liquid regions 314 of the hardenable resin composition. The microstructures 382 in the casting film 380 can be formed by a wide variety of techniques, including contacting the film with a metal microreplication master tool formed using diamond turning techniques. The replication can be performed against a master using any microreplication techniques known to those of ordinary skill in the art of microreplication including, for example, embossing, cast and cure of a prepolymer resin (using thermal or photochemical initiation), or hot melt extrusion. In some cases, microreplication involves casting of a photocurable prepolymer solution against a template followed by photopolymerization of the prepolymer solution.

In this disclosure, "microstructures" refer to structures that have features that are less than 1000 µm, less than 100 µm, less than 50 µm, or less than 5 µm, or less than 1µm. The microstructures can have a wide variety of shapes including, but not limited to, grooves separated by V-shaped regions or trapezoidal regions, dots, depressions, prisms, a matte surface, a holographic surface, and the like. For additional information regarding microreplication of three-dimensional structures, see, for example, U.S. Patent No. 5,183,597 and WO00/48037.

The microstructures 382 contact the liquid regions 314 and in some cases contact the surface 315 of the substrate 316 in areas of the surface 315 not occupied by the liquid regions 314.

In step 306, the liquid regions are at least partially hardened to form structures 314A in a pattern corresponding to the pattern 312. The structures 314A are formed by at least partially hardening the liquid regions 314 by any suitable technique including, for example, heating, application of UV radiation through the casting film 380, pressure, and combinations thereof.

In step 308, the casting film 380 is peeled away, leaving behind a pattern 322 of structures 324. At least a portion of the structures 324 include a microstructured surface 325 with microstructures 327 corresponding to an inverse of the pattern 390 of the microstructures 382.

The substrate 316 including the microstructured structures 324 may then be contacted with a heated mold (not shown in FIG. 4) and formed into a dental appliance that includes a plurality of cavities configured to retain one or more teeth of a patient. Once released from the mold, the dental appliance includes a pattern of discrete microstructures that corresponds to the pattern 322 of microstructured structures 324.

In another embodiment, dental appliance including a plurality of cavities configured to retain one or more teeth of a patient may be formed by any suitable method such as, for example, thermoforming a polymeric film substrate, three-dimensional (3D) printing, laser patterning, chemical or physical etching, additive manufacturing, and combinations thereof. Once the dental appliance is formed, the hardenable dental resin compositions described above may be applied to one or more surfaces of the dental appliance, or selected portions thereof, using any suitable method and hardened to form a substantially continuous layer or a pattern of discrete structures as described above. In various example embodiments, which are not intended to be limiting, the hardenable dental resin composition may be applied by spraying, dip coating, printing, and the like. In various embodiments, the substantially continuous layer or the pattern of discrete structures may be applied to all of at least one surface of the dental appliance, or to a selected portion thereof. For example, the layer or pattern of discrete structures may be applied to portions of the dental appliance that are intended to cover specific teeth, or portion of the dental appliance that are most visible when the dental appliance is in use in the mouth of the patient.

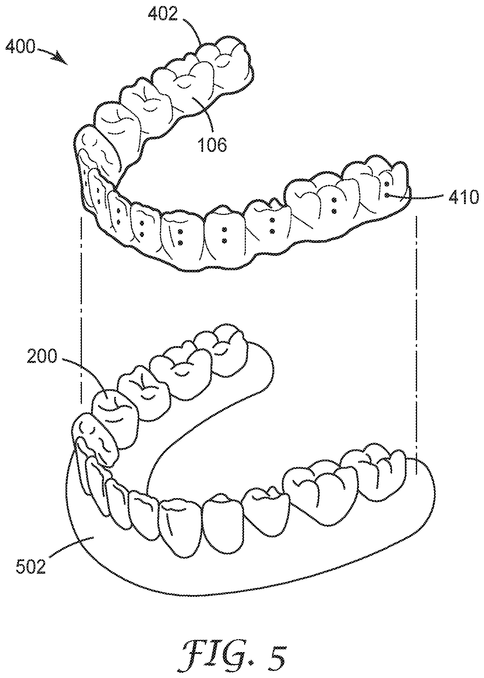

Referring now to FIG. 5, a shell 402 of an orthodontic appliance 400 is an elastic polymeric material that generally conforms to a patient's teeth 500, but that is slightly out of alignment with the patient's initial tooth configuration. In some embodiments, the shell 402 may be one of a group or a series of shells having substantially the same shape or mold, but which are formed from different materials to provide a different stiffness or resilience as need to move the teeth of the patient. In this manner, in one embodiment, a patient or a user may alternately use one of the orthodontic appliances during each treatment stage depending upon the patient's desired usage time or treatment time period for each treatment stage.

No wires or other means may be provided for holding the shell 402 over the teeth 500, but in some embodiments, it may be desirable or necessary to provide individual anchors on teeth with corresponding receptacles or apertures in the shell 402 so that the shell 402 can apply a retentive or other directional orthodontic force on the tooth which would not be possible in the absence of such an anchor.

The shells 402 may be customized, for example, for day time use and night time use, during function or non-function (chewing vs. non-chewing), during social settings (where appearance may be more important) and nonsocial settings (where the aesthetic appearance may not be a significant factor), or based on the patient's desire to accelerate the teeth movement (by optionally using the more stiff appliance for a longer period of time as opposed to the less stiff appliance for each treatment stage).

For example, in one aspect, the patient may be provided with a clear orthodontic appliance 400 that may be primarily used to retain the position of the teeth, and an opaque orthodontic appliance that may be primarily used to move the teeth for each treatment stage. Accordingly, during the daytime, in social settings, or otherwise in an environment where the patient is more acutely aware of the physical appearance, the patient may use the clear appliance. Moreover, during the evening or nighttime, in non-social settings, or otherwise when in an environment where physical appearance is less important, the patient may use the opaque appliance that is configured to apply a different amount of force or otherwise has a stiffer configuration to accelerate the teeth movement during each treatment stage. This approach may be repeated so that each of the pair of appliances are alternately used during each treatment stage.

Referring again to FIG. 5, systems and method in accordance with the various embodiments include a plurality of incremental position adjustment appliances, each formed from the same or a different material, for each treatment stage of orthodontic treatment. The orthodontic appliances may be configured to incrementally reposition individual teeth 500 in an upper or lower jaw 502 of a patient. In some embodiments, cavities 504 are configured such that selected teeth will be repositioned, while others of the teeth will be designated as a base or anchor region for holding the repositioning appliance in place as it applies the resilient repositioning force against the tooth or teeth intended to be repositioned.

Placement of the elastic positioner shell 402 over the teeth 500 applies controlled forces in specific locations to gradually move the teeth into the new configuration. Repetition of this process with successive appliances having different configurations eventually moves a patient's teeth through a series of intermediate configurations to a final desired configuration. During the movement process, structures 410 on the shell 402 provide a therapeutic or aesthetic function as described above.

In one example embodiment, the orthodontic alignment appliances may include a shell 402 made from a clear elastomeric polymeric material and are referred to as a clear tray aligner (CTA). In use, CTAs at stage one (N) of treatment are inserted over a dental arch with misaligned or malocclusion dentition at stage zero (N-1). The polymeric tray can be stretched to force the dentition to reposition into the next stage one (N). In other words, each aligner tray starts out "ill-fitting" on purpose. The polymeric tray may have a contoured surface to be able to engage and transfer forces to the dentition to effectively reposition the right tooth or set of teeth at a designated location, vector and time. Because of the ability of the polymeric tray to engage and/or transfer forces to the dentition while starting out "ill-fitting," the CTA can be effective and/or efficient appliance for, e.g., correcting Class II malocclusions, more comfortable to patient, easy to place/remove, and providing predictable treatment outcome. Therefore, a polymeric aligner tray with some flexibility at least in part because of its flat surface may be able to engage and/or transfer forces to the dentition to effectively reposition the right tooth or set of teeth at a designated location, vector and time. Because of the fit between the tooth or set of teeth, the CTA can be effective and/or efficient appliance for correcting Class II malocclusions and be comfortable to the patient, easy to place/remove, predictable treatment outcome, etc.

Embodiments will now be illustrated with reference to the following non-limiting examples.

### EXAMPLES

### Example 1

Direct printing of a discrete RMGI dot pattern onto untreated PETG was achieved with stencil printing. A benchtop stencil printer was used to deposit pattern dots of different diameters, aspect ratios, and dots with random or regular patterns and pattern densities with a commercially available VANISH-XT Varnish (3M OCSD, St. Paul, MN). The varnish included a two-part paste with the components set forth in Table 1 below:

**Table 1**

| **Composition of Paste A** | **Composition of Paste B** |
|---|---|
| Silane treated glass | Copolymer of acrylic and itaconic acids |
| Silane treated silica | water |
| 2-hydroxyethyl methacrylate (HEMA) | 2-hydroxyethyl methacrylate (HEMA) |
| Bisphenol A diglycidyl ether dimethacrylate (bisGMA) | Calcium glycerophosphate (GCP) |
| Water | DL-camphoroquinone (CPQ) |
| Ethyl-4-(dimethylamino) benzoate (EDMABP) | Diphenyliodonium hexafluorophosphate (DPIPF6) |
| | Butylated hydroxyl toluene (BHT) |

A stencil with 1 mm opening and 2 mm pitch from Sefor Inc. (Buffalo, NY) was used. VANISH-XT varnish dots were printed on one side of clear PETG (Scheu Dental, Great Lakes, Tonawanda, NY) with 125 mm diameter x 0.75 mm thickness. The printed RMGI pattern was hardened through chemically crosslinking at ambient conditions for 3 minutes followed by visible light curing (LED array light box, 300 mW) for 1.5-min under flowing nitrogen. The hardened RMGI pattern had relatively poor adhesion to PETG substrate.

### Example 2

A PETG substrate was primed with Scotchbond Universal Adhesive (3M Co., St Paul, MN) to promote adhesion between the RMGI and PETG substrate. A 1-mil (0.025 mm) thick wet film was coated onto PETG substrate, dried in air for 20 seconds under gentle compressed air, crosslinked for 20 seconds in the LED lightbox under ambient conditions as described in Example 1.

Upon SBU treating the PETG disk, RMGI was pixel coated on the entire surface and allowed harden (chemical and light) as described in Example 1.

The printed PETG discs were thermoformed with a Biostar VI pressure molding/thermoforming machine (Scheu Dental, Great Lakes, Tonawanda, NY) to shape aligner trays per UTK-RDTP-11-300071.

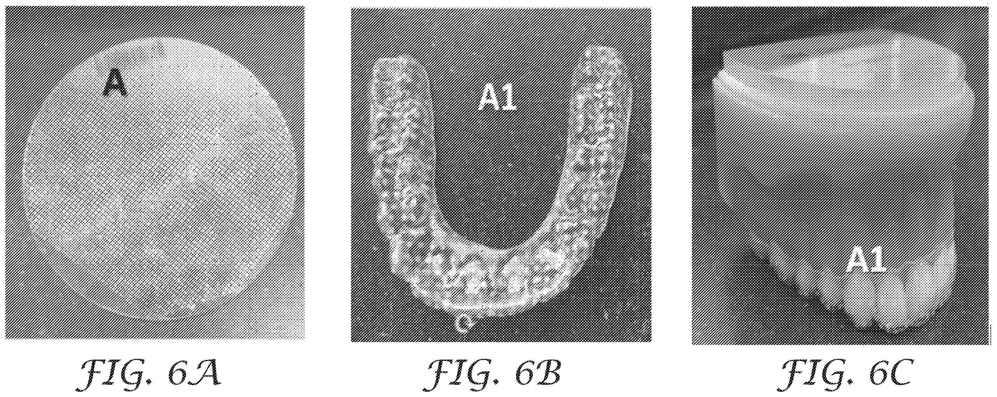

FIG. 6A is a photograph of the PETG disk with the pixelated RMGI coating, FIG. 6B is a photograph of a clear tray aligner (CTA) with RMGI coating inside the shell thereof, and FIG. 6C is a photograph of the CTA on a typodont.

### Example 3

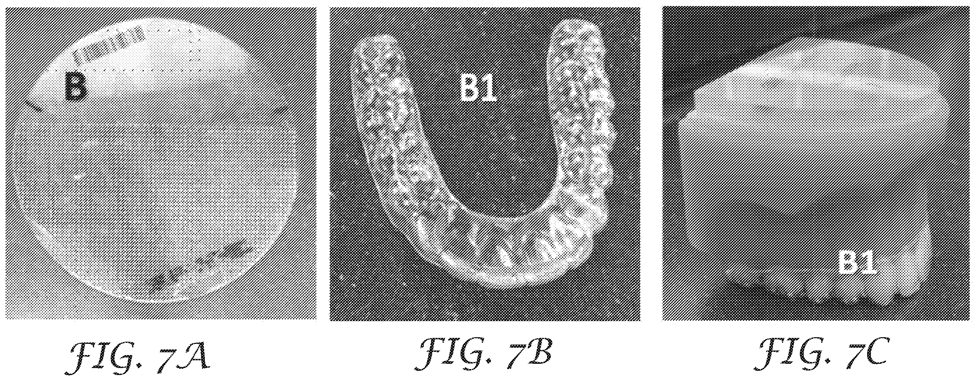

A pixelated pattern of RMGI was printed on a first region of a PETG substrate as described in Example 1, and a second region was left uncoated. As shown in FIG. 7A, the PETG disk (B) was partially covered with pixelated RMGI.

The printed PETG discs were thermoformed with a Biostar VI pressure molding/thermoforming machine (Scheu Dental, Great Lakes, Tonawanda, NY) to shape aligner trays per UTK-RDTP-11-300071.

FIG. 7B shows that the clear tray aligner had the pixelated RMGI pattern from the first region of the PETG disc on the six anterior teeth (often referred to as the "social six") and the uncoated second region of the PETG disc formed a portion of the clear tray aligner on the anterior teeth. FIG. 7C shows the clear tray aligner on a typodont.

### Example 4

In this example the clear tray aligners of Examples 2-3 were recharged with beneficial ions (F, Ca and P) via exposure to a 1.1% NaF gel dentifrice available from Colgate under the trade designation PREVIDENT GEL and a buffered 1% NaF solution. Although RMGIs can release F, Ca and P ions over an extended periods, high caries and WSL risk patients can benefit from periodic RMGI recharge through external exposure to dentifrice or gels/solutions.

## Claims

1. A method for making a dental appliance (400) configured to position at least one tooth of a patient, the method comprising:
printing a hardenable liquid resin composition on a major surface (315, 317) of a polymeric material to form a pattern thereon comprising a plurality of unhardened liquid regions (314), wherein the hardenable liquid resin composition comprises a glass ionomer, a resin modified glass ionomer, or combinations thereof, along with at least one therapeutic agent and a dental filler in an aqueous hardenable resin matrix;
hardening the unhardened liquid regions (314) to form a corresponding array of structures on the major surface, wherein the structures have a characteristic cross-sectional dimension of about 25 microns to about 1 mm, and a feature spacing of about 100 microns to about 2000 microns and
forming a dental appliance (400) from the polymeric material, wherein the dental appliance comprises an arrangement of cavities configured to receive one or more teeth.

2. The method of claim 1, wherein the cavities are formed by thermoforming, laser processing, chemical or physical etching, additive manufacturing, or combinations thereof.

3. The method of claims 1 or 2, wherein the pattern is a substantially continuous coating on the major surface.

4. The method of any one of preceding claims, wherein the dental appliance has at least one of a visible light transmission of about 75% to about 99%, a haze of less than about 20%, and a clarity of about 75% to about 100%.

5. The method of any one of the preceding claims, further comprising hardening the structures on the polymeric material during or prior to the forming step.

6. The method of any one of the preceding claims, , wherein the therapeutic agent is chosen from calcium compounds, phosphorous compounds, fluoride compounds, and mixtures and combinations thereof.

7. The method of any of the previous claims, wherein the dental filler is chosen from borate glass, phosphate glass, fluoroaluminosilicate glass, silane treated glass, silane treated silica, and mixtures and combinations thereof.

8. The method of any one of the previous claims , wherein the hardenable resin matrix comprises a polyacid.

9. The method of any of claims 1-7, wherein the hardenable resin matrix further comprises a polymerizable component comprising an ethlyenically unsaturated compound with acid functionality.

10. The method of any of claims 7 to 10, wherein the hardenable liquid composition comprises a nanofiller comprising particles selected from the group consisting of silica; zirconia; oxides of titanium, aluminum, cerium, tin, yttrium, strontium, barium, lanthanum, zinc, ytterbium, bismuth, iron, and antimony; and combinations thereof.

11. A method for making a dental appliance (400) configured to position at least one tooth of a patient, the method comprising:
printing a hardenable liquid resin composition on a major surface (315, 317) of a first polymeric film to form a pattern of discrete unhardened liquid regions (314) thereon, wherein the hardenable liquid resin composition comprises a glass ionomer, a resin modified glass ionomer, or combinations thereof;
forming a corresponding array of structures on the major surface of the first polymeric film, wherein the structures have a characteristic cross-sectional dimension of about 25 microns to about 1 mm, and a feature spacing of about 100 microns to about 2000 microns;
contacting the major surface of the first polymeric film with a major surface of a second polymeric film (380), wherein the major surface of the second polymeric film (380) comprises a pattern of microstructures (382), and wherein the microstructures (382) contact an exposed surface of at least a portion of the structures (314) on the major surface of the first polymeric film;
hardening the structures to form an inverse pattern of microstructures in the exposed surfaces of the structures; and
forming a dental appliance (400) with the polymeric material, wherein the dental appliance comprises an arrangement of cavities configured to receive one or more teeth.

12. The method of claim 12, wherein the microstructures comprise V-grooves, matte structures and holographic films.

13. The method of claim 12 or 13, wherein the microstructures comprise grooves separated by trapezoidal regions.

14. A dental appliance (400), comprising:
a polymeric substrate (216) comprising a plurality of cavities for receiving one or more teeth; and
an array of printed structures on the substrate, wherein the printed structures comprise a glass ionomer, a resin modified glass ionomer, or combinations thereof, and wherein the structures have an average feature size of about 25 µm to about 1000 µm and an average feature spacing of about 100 µm to about 2000 µm, and wherein the dental appliance (400) has a visible light transmission of about 75% to about 99%,
wherein the structures further comprise at least one therapeutic agent and a dental filler in a resin matrix.

## Patentansprüche

1. Ein Verfahren zum Herstellen einer zahnärztlichen Vorrichtung (400), die konfiguriert ist, um mindestens einen Zahn eines Patienten zu positionieren, das Verfahren aufweisend:
Drucken einer härtbaren flüssigen Harzzusammensetzung auf eine Hauptoberfläche (315, 317) eines Polymermaterials, um darauf ein Muster auszubilden, aufweisend eine Mehrzahl von ungehärteten flüssigen Regionen (314),
wobei die härtbare flüssige Harzzusammensetzung ein Glasionomer, ein harzmodifiziertes Glasionomer oder Kombinationen davon zusammen mit mindestens einem therapeutischen Wirkstoff und einem Zahnfüllstoff in einer wässrigen härtbaren Harzmatrix aufweist,
Härten der ungehärteten flüssigen Regionen (314), um ein entsprechendes Array von Strukturen auf der Hauptoberfläche auszubilden, wobei die Strukturen eine charakteristische Querschnittsabmessung von etwa 25 Mikrometer bis etwa 1 mm und einen Merkmalsabstand von etwa 100 Mikrometer bis etwa 2.000 Mikrometer aufweisen, und
Ausbilden einer zahnärztlichen Vorrichtung (400) aus dem Polymermaterial, wobei die zahnärztliche Vorrichtung eine Anordnung von Hohlräumen aufweist, die konfiguriert ist, um einen oder mehrere Zähne aufzunehmen.

2. Das Verfahren nach Anspruch 1, wobei die Hohlräume durch Thermoformen, Laserbearbeitung, chemisches oder physikalisches Ätzen, additive Fertigung oder Kombinationen davon ausgebildet werden.

3. Das Verfahren nach Anspruch 1 oder 2, wobei das Muster eine im Wesentlichen durchgehende Beschichtung auf der Hauptoberfläche ist.

4. Das Verfahren nach einem der vorstehenden Ansprüche, wobei die zahnärztliche Vorrichtung mindestens eines von einer Durchlässigkeit für sichtbares Licht von etwa 75 % bis etwa 99 %, einer Trübung von weniger als etwa 20 % und eine Klarheit von etwa 75 % bis etwa 100 % aufweist.

5. Das Verfahren nach einem der vorstehenden Ansprüche, ferner aufweisend das Härten der Strukturen auf dem Polymermaterial während oder vor dem Formungsschritt.

6. Das Verfahren nach einem der vorstehenden Ansprüche, wobei das therapeutische Mittel aus Kalziumverbindungen, Phosphorverbindungen, Fluoridverbindungen und Mischungen und Kombinationen davon ausgewählt wird.

7. Das Verfahren nach einem der vorstehenden Ansprüche, wobei der Zahnfüllstoff aus Boratglas, Phosphatglas, Fluoraluminosilikatglas, silanbehandeltem Glas, silanbehandelter Kieselsäure und Mischungen und Kombinationen davon ausgewählt wird.

8. Das Verfahren nach einem der vorstehenden Ansprüche, wobei die härtbare Harzmatrix eine Polysäure aufweist.

9. Das Verfahren nach einem der Ansprüche 1 bis 7, wobei die härtbare Harzmatrix ferner eine polymerisierbare Komponente aufweist, aufweisend eine ethylenisch ungesättigte Verbindung mit Säurefunktionalität.

10. Das Verfahren nach einem der Ansprüche 7 bis 10, wobei die härtbare flüssige Zusammensetzung einen Nanofüllstoff aufweist, aufweisend Partikel, die aus der Gruppe ausgewählt sind, bestehend aus Siliciumdioxid; Zirkonoxid; Oxiden von Titan, Aluminium, Cer, Zinn, Yttrium, Strontium, Barium, Lanthan, Zink, Ytterbium, Wismut, Eisen und Antimon; und Kombinationen davon.

11. Ein Verfahren zum Herstellen einer zahnärztlichen Vorrichtung (400), die konfiguriert ist, um mindestens einen Zahn eines Patienten zu positionieren, das Verfahren aufweisend:
Drucken einer härtbaren flüssigen Harzzusammensetzung auf eine Hauptoberfläche (315, 317) einer ersten Polymerfolie, um darauf ein Muster von diskreten ungehärteten flüssigen Regionen (314) auszubilden, wobei die härtbare flüssige Harzzusammensetzung ein Glasionomer, ein harzmodifiziertes Glasionomer oder Kombinationen davon aufweist;
Ausbilden eines entsprechenden Arrays von Strukturen auf der Hauptoberfläche der ersten Polymerfolie, wobei die Strukturen eine charakteristische Querschnittsabmessung von etwa 25 Mikrometer bis etwa 1 mm und einen Merkmalsabstand von etwa 100 Mikrometer bis etwa 2.000 Mikrometer aufweisen;
Kontaktieren der Hauptoberfläche der ersten Polymerfolie mit einer Hauptoberfläche einer zweiten Polymerfolie (380), wobei die Hauptoberfläche der zweiten Polymerfolie (380) ein Muster von Mikrostrukturen (382) aufweist und wobei die Mikrostrukturen (382) eine freiliegende Oberfläche von mindestens einem Abschnitt der Strukturen (314) auf der Hauptoberfläche der ersten Polymerfolie kontaktieren;
Härten der Strukturen, um ein umgekehrtes Muster von Mikrostrukturen in den freiliegenden Oberflächen der Strukturen auszubilden; und
Formen einer zahnärztlichen Vorrichtung (400) mit dem Polymermaterial, wobei die zahnärztliche Vorrichtung eine Anordnung von Hohlräumen aufweist, die konfiguriert ist, um einen oder mehrere Zähne aufzunehmen.

12. Das Verfahren nach Anspruch 12, wobei die Mikrostrukturen V-Rillen, matte Strukturen und holografische Folien aufweisen.

13. Das Verfahren nach Anspruch 12 oder 13, wobei die Mikrostrukturen Rillen aufweisen, die durch trapezförmige Regionen getrennt sind.

14. Eine zahnärztliche Vorrichtung (400), aufweisend:
ein Polymersubstrat (216), aufweisend eine Mehrzahl von Hohlräumen zum Aufnehmen eines oder mehrerer Zähne; und
ein Array von gedruckten Strukturen auf dem Substrat, wobei die gedruckten Strukturen ein Glasionomer, ein harzmodifiziertes Glasionomer oder Kombinationen davon aufweisen, und wobei die Strukturen eine durchschnittliche Merkmalsgröße von etwa 25 µm bis etwa 1000 µm und einen durchschnittlichen Merkmalsabstand von etwa 100 µm bis etwa 2.000 µm aufweisen, und wobei die zahnärztliche Vorrichtung (400) eine Durchlässigkeit für sichtbares Licht von etwa 75 % bis etwa 99 % aufweist,
wobei die Strukturen ferner mindestens ein therapeutisches Mittel und einen Zahnfüllstoff in einer Harzmatrix aufweisen.

## Revendications

1. Procédé de fabrication d'un appareil dentaire (400) conçu pour positionner au moins une dent d'un patient, le procédé comprenant :
l'impression d'une composition de résine liquide durcissable sur une surface principale (315, 317) d'un matériau polymère pour former un motif sur celle-ci comprenant une pluralité de régions liquides non durcies (314),
dans lequel la composition de résine liquide durcissable comprend un verre ionomère, un verre ionomère modifié à la résine, ou des combinaisons de ceux-ci, ainsi qu'au moins un agent thérapeutique et une charge dentaire dans une matrice de résine durcissable aqueuse ;
le durcissement des régions liquides non durcies (314) pour former un réseau correspondant de structures sur la surface principale, dans lequel les structures ont une dimension transversale caractéristique d'environ 25 microns à environ 1 mm, et un espacement entre les éléments d'environ 100 microns à environ 2 000 microns et la formation d'un appareil dentaire (400) à partir du matériau polymère, dans lequel l'appareil dentaire comprend un agencement de cavités conçues pour recevoir une ou plusieurs dents.

2. Procédé selon la revendication 1, dans lequel les cavités sont formées par thermoformage, traitement au laser, gravure chimique ou physique, fabrication additive, ou combinaisons de ceux-ci.

3. Procédé selon les revendications 1 ou 2, dans lequel le motif est un revêtement sensiblement continu sur la surface principale.

4. Procédé selon l'une quelconque des revendications précédentes, dans lequel l'appareil dentaire a au moins l'une parmi une transmission de lumière visible d'environ 75 % à environ 99 %, une turbidité inférieure à environ 20 % et une clarté d'environ 75 % à environ 100 %.

5. Procédé selon l'une quelconque des revendications précédentes, comprenant en outre le durcissement des structures sur le matériau polymère pendant ou juste avant l'étape de formage.

6. Procédé selon l'une quelconque des revendications précédentes, dans lequel l'agent thérapeutique est choisi parmi composés de calcium, composés de phosphore, composés de fluor, et mélanges et combinaisons de ceux-ci.

7. Procédé selon l'une quelconque des revendications précédentes, dans lequel la charge dentaire est choisie parmi verre boraté, verre phosphaté, verre fluoroaluminosilicate, verre traité au silane, silice traitée au silane, et mélanges et combinaisons de ceux-ci.

8. Procédé selon l'une quelconque des revendications précédentes, dans lequel la matrice de résine durcissable comprend un polyacide.

9. Procédé selon l'une quelconque des revendications 1 à 7, dans lequel la matrice de résine durcissable comprend en outre un composant polymérisable comprenant un composé éthyléniquement insaturé avec une fonctionnalité acide.

10. Procédé selon l'une quelconque des revendications 7 à 10, dans lequel la composition liquide durcissable comprend une nanocharge comprenant des particules choisies dans le groupe constitué par silice ; zircone ; oxydes de titane, aluminium, cérium, étain, yttrium, strontium, baryum, lanthane, zinc, ytterbium, bismuth, fer et antimoine ; et combinaisons de ceux-ci.

11. Procédé de fabrication d'un appareil dentaire (400) conçu pour positionner au moins une dent d'un patient, le procédé comprenant :
l'impression d'une composition de résine liquide durcissable sur une surface principale (315, 317) d'un premier film polymère pour former un motif de régions liquides non durcies distinctes (314) sur celle-ci, dans lequel la composition de résine liquide durcissable comprend un verre ionomère, un verre ionomère modifié par la résine, ou des combinaisons de ceux-ci ;
la formation d'un réseau correspondant de structures sur la surface principale du premier film polymère, dans lequel les structures ont une dimension transversale caractéristique d'environ 25 microns à environ 1 mm, et un espacement entre les éléments d'environ 100 microns à environ 2 000 microns ;
la mise en contact de la surface principale du premier film polymère avec une surface principale d'un second film polymère (380), dans lequel la surface principale du second film polymère (380) comprend un motif de microstructures (382), et dans lequel les microstructures (382) entrent en contact avec une surface exposée d'au moins une partie des structures (314) sur la surface principale du premier film polymère ;
le durcissement des structures pour former un motif inverse de microstructures dans les surfaces exposées des structures ; et
la formation d'un appareil dentaire (400) avec le matériau polymère, dans lequel l'appareil dentaire comprend un agencement de cavités conçus pour recevoir une ou plusieurs dents.

12. Procédé selon la revendication 12, dans lequel les microstructures comprennent des rainures en V, des structures mates et des films holographiques.

13. Procédé selon la revendication 12 ou 13, dans lequel les microstructures comprennent des rainures séparées par des régions trapézoïdales.

14. Appareil dentaire (400), comprenant :
un substrat polymère (216) comprenant une pluralité de cavités destinées à recevoir une ou plusieurs dents ; et
un réseau de structures imprimées sur le substrat, dans lequel les structures imprimées comprennent un verre ionomère, un verre ionomère modifié par la résine, ou des combinaisons de ceux-ci, et dans lequel les structures ont une taille moyenne d'élément d'environ 25 µm à environ 1 000 µm et un espacement entre les éléments moyen d'environ 100 µm à environ 2 000 µm, et dans lequel l'appareil dentaire (400) a une transmission de lumière visible d'environ 75 % à environ 99 %,
dans lequel les structures comprennent en outre au moins un agent thérapeutique et une charge dentaire dans une matrice de résine.
